# EUROPEAN PATENT SPECIFICATION

(11) **EP 4 193 543 B1**
(45) Date of publication and mention of the grant of the patent: **15.05.2024**
(21) Application number: 21758774.0
(22) Date of filing: 09.08.2021
(51) Int. Cl.: H04L 5/00

(54) **SIGNALING FOR UPDATING TCI STATE OF A CORESET WITH DCI**
SIGNALISIERUNG ZUR AKTUALISIERUNG DES TCI-ZUSTANDS EINES CORESET MIT DCI
SIGNALISATION POUR METTRE À JOUR L'ÉTAT TCI D'UN CORESET AVEC DCI

(30) Priority: 07.08.2020 US 202063062986 P
(43) Date of publication of application: 14.06.2023
(60) Divisional application: 24165488.8
(73) Proprietor: Telefonaktiebolaget LM Ericsson (publ), 164 83 Stockholm (SE)
(72) Inventor: NILSSON, Andreas, 413 13 Göteborg (SE); MURUGANATHAN, Siva, Stittsville, Ontario K2S 0R3 (CA); ZHANG, Jianwei, 170 62 Solna (SE); MÄÄTTÄNEN, Helka-Liina, 02369 Espoo (FI)
(74) Representative: Ericsson
(86) International application number: PCT/IB2021/057345
(87) International publication number: WO 2022/029747

(56) References cited:
- US-A1- 2020 045 569
- ZTE: "Preliminary views on further enhancement for NR MIMO", 3GPP DRAFT; R1-2003483, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200525 - 20200605 16 May 2020 (2020-05-16), XP051885267, Retrieved from the Internet: URL:https://ftp.3gpp.org/tsg_ran/WG1_RL1/T SGR1_101-e/Docs/R1-2003483.zip R1-2003483 Preliminary views on further enhancement for NR MIMO.docx [retrieved on 2020-05-16]

## Description

### Related Applications

This application claims the benefit of provisional patent application serial number 63/062,986, filed August 7, 2020.

### Technical Field

Generally, the present disclosure is directed to signaling for updating Transmission Configuration Indicator (TCI) state of a Control resource Set (CORESET) with Downlink Control Information (DCI).

### Background

### I. New Radio (NR)

The new generation mobile wireless communication system (5G) or New Radio (NR) supports a diverse set of use cases and a diverse set of deployment scenarios. NR uses CP-OFDM (Cyclic Prefix Orthogonal Frequency Division Multiplexing) in the downlink (i.e., from a network node, gNodeB (gNB), evolved NodeB (eNB), or base station, to a User Equipment (UE)) and both CP-OFDM and Direct Fourier Transform (DFT) DFT-spread OFDM (DFT-S-OFDM) in the uplink (i.e., from UE to gNB). In the time domain, NR downlink and uplink physical resources are organized into equally-sized subframes of one millisecond (1 ms) each. A subframe is further divided into multiple slots of equal duration.

The slot length of the multiple slots depends on subcarrier spacing. As an example, for subcarrier spacing of Δ*f* = 15*kHz*, there is generally only one slot per subframe and each slot always consists of 14 OFDM symbols, irrespectively of the subcarrier spacing.

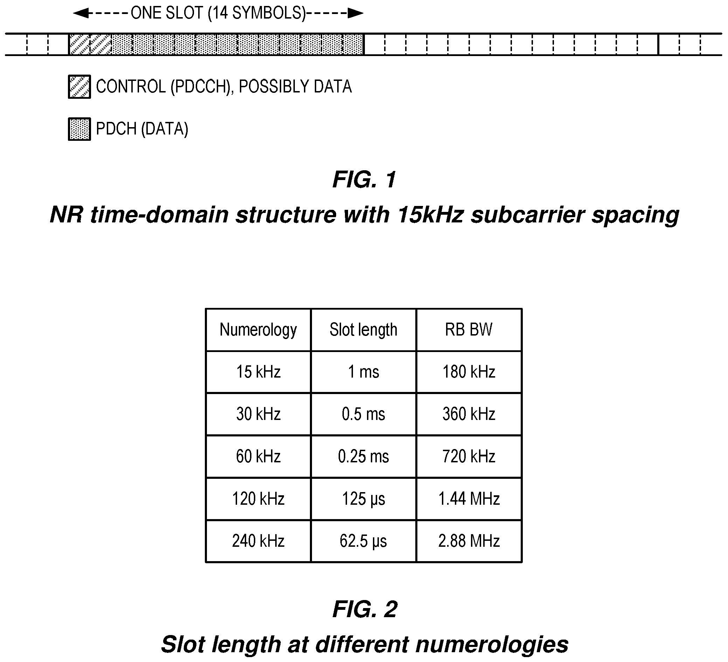

Typically, data scheduling in NR are per-slot basis. An example of per-slot basis data scheduling is illustrated in Figure 1, where the first two symbols contain Physical Downlink Control Channel (PDCCH) and the remaining 12 symbols contains Physical Data Channel (PDCH), either a PDSCH (physical downlink shared channel), or PUSCH (physical uplink shared channel).

Different subcarrier spacing values are supported in NR. The supported subcarrier spacing values (also referred to as different numerologies) are given by Δ*f* = (15 × 2*^{α}*) *kHz* where *α* is a non-negative integer. Δ*f* = 15*kHz* is the basic subcarrier spacing that is also used in Long-Term Evolution (LTE). Figure 2 illustrates an example of the slot durations at different subcarrier spacings.

In the frequency domain physical resource definition, a system bandwidth is divided into Resource Blocks (RBs), each of which corresponds to 12 contiguous subcarriers. The Common RBs (CRBs) are numbered starting with zero (0) from one end of the system bandwidth. The UE is configured with one or up to four Bandwidth Parts (BWPs) which may be a subset of the RBs supported on a carrier. Hence, a BWP may start at a CRB larger than zero. All configured BWPs have a common reference, the CRB 0. Hence, a UE can be configured with a narrow BWP (e.g., 10 MHz) and a wide BWP (e.g., 100 MHz), but only one BWP can be active for the UE at a given point in time. The Physical RBs (PRBs) are numbered from 0 to N-1 within a BWP (but the 0th PRB may thus be the Kth CRB where K>0).

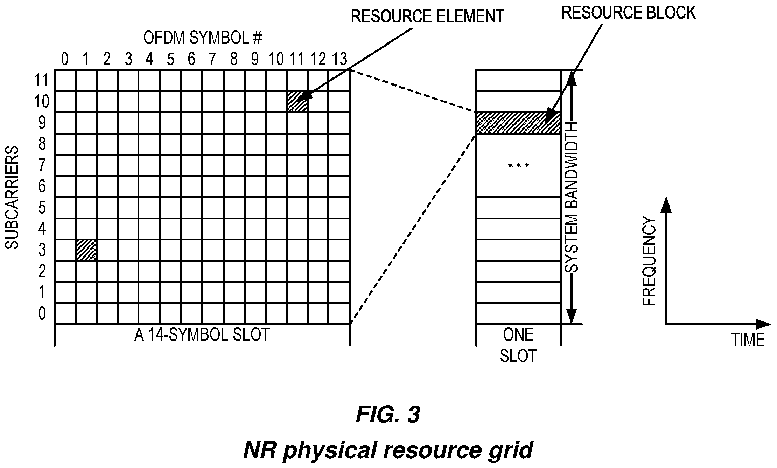

Figure 3 illustrates an example basic NR physical time-frequency resource grid, where only one RB within a 14-symbol slot is shown. One OFDM subcarrier during one OFDM symbol interval forms one Resource Element (RE).

Downlink transmissions can be dynamically scheduled. For example, in each slot, the gNB transmits Downlink Control Information (DCI) over PDCCH that indicates a UE that data is to be transmitted to. Additionally, the DCI indicates which RBs in the current downlink slot the data is transmitted on. PDCCH is typically transmitted in the first one or two OFDM symbols in each slot in NR. The UE data are carried on PDSCH. A UE first detects and decodes PDCCH and when the decoding is successful, it then decodes the corresponding PDSCH based on the decoded control information in the PDCCH.

Uplink data transmission can also be dynamically scheduled using PDCCH. Similar to downlink, a UE first decodes uplink grants in PDCCH and then transmits data over PUSCH based on the decoded control information in the uplink grant such as modulation order, coding rate, uplink resource allocation, etc.

### II. Synchronization Signal Block (SSB)

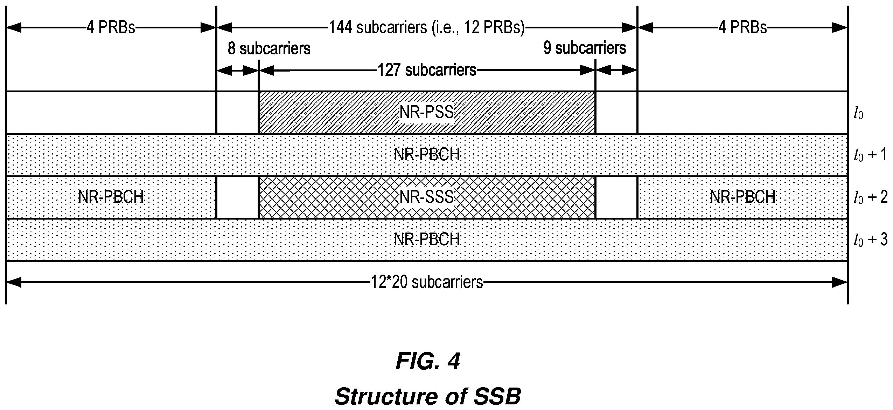

Synchronization Signal Block (SSB) is a broadcast signal in NR that aims to provide initial synchronization, basic system information, and mobility measurements. Figure 4 illustrates an example structure of a SSB, which consists of one Primary Synchronization Signal (PSS), one Secondary Synchronization Signal (SSS), and a Physical Broadcast Channel (PBCH). The PSS and SSS are transmitted over 127 subcarriers, where the sub-carrier spacing could be 15/30 kHz for below 6 GHz and 120/240 kHz for above 6 GHz.

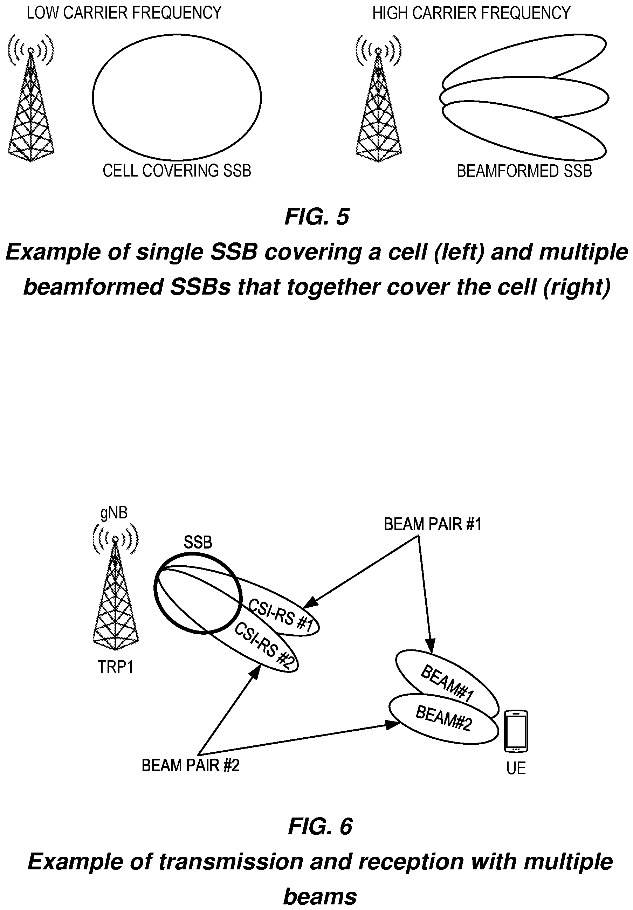

For low frequencies, it is expected that each cell transmits one SSB that covers the whole cell, while for higher frequencies, several beamformed SSBs are expected to be needed to attain coverage over the whole cell, which is illustrated in Figure 5. The maximum number of configurable SSBs per cell depends on the carrier frequency. For example, a maximum number of 4 configurable SSBs can be used when the carrier frequency is below 3 GHz, a maximum of 8 configurable SSBs when the carrier frequency is between 3-6 GHz, and a maximum of 64 configurable SSBs can be used when carrier frequency is above 6 GHz. The SSBs are transmitted in an SSB transmission burst which can last up to 5 ms. The periodicity of the SSB burst is generally configurable (e.g., with options such as 5, 10, 20, 40, 80, 160 milliseconds, etc.).

### III. PDCCH

Messages transmitted over the radio link to users can be broadly classified as control messages or data messages. Control messages are used to facilitate the proper operation of the system as well as proper operation of each UE within the system. Control messages could include commands to control functions such as the transmitted power from a UE, signaling of RBs within which the data is to be received by the UE or transmitted from the UE, and so on. Examples of control messages in NR are the PDCCH, which, for example, carries scheduling information and power control messages. Depending on what control data is conveyed in the PDCCH, different DCI formats can be used. The PDCCH messages in NR are demodulated using the PDCCH Demodulation Reference Signal (DMRS) that is frequency multiplexed with DCI. As such, the PDCCH can be understood to be a self-contained transmission which enables beamforming of the PDCCH.

In NR, the PDCCH is located within one or several configurable/dynamic control regions called Control Resource Sets (CORESETs). The size of the CORESET, with respect to time and frequency, is flexible in NR. In frequency domain, the allocation is done in units of 6 RBs using a bitmap, and in time domain, a CORESET can consist of 1-3 consecutive OFDM symbols. A CORESET is then associated with a search space set to define when in time the UE should monitor the CORESET. The search space set includes, for example, parameters defining the periodicity, OFDM start symbol within a slot, slot-level offset, which DCI formats to blindly decode, and the aggregation level of the DCI formats. As such, together, a CORESET and an associated search space set define when in time and frequency the UE should monitor for control channel reception. Even though OFDM PDCCH can be located in any OFDM symbol in a slot, it is expected that the PDCCH mainly will be scheduled in the first few OFDM symbols of a slot in order to enable early data decoding and low latency.

A UE can be configured with up to five CORESETs per "PDCCH-config," and as such, the maximum number of CORESETs per serving cell is 20 (e.g., as the maximum number of BWPs per serving cell is 4, the maximum number of CORESETs per serving cell is 4*5=20). Each CORESET can be configured with a transmission configuration indicator (TCI) state containing a downlink reference signal (DL-RS) as spatial quasi co-located (QCL) indication, indicating to the UE a spatial direction from where the UE can assume to receive the PDCCHs corresponding to that CORESET. To improve the reliability (e.g., to counteract Radio Link Failure (RLF) due to blocking), a UE can be configured with multiple CORESETs, each with different spatial QCL assumptions (e.g., Transmission Configuration Indicator (TCI) states). In this way, in case one beam pair link is blocked (e.g., a beam pair link associated with a first spatial QCL relation), the UE might still be reached by the network by transmitting PDCCH associated with a CORSET configured with another spatial Quasi Co-located (QCL) relation.

### IV. Transmission with Multiple Beams

In high Frequency Range (FR2), multiple Radio Frequency (RF) beams may be used to transmit and receive signals at a gNB and a UE. For each DL beam from a gNB, there is typically an associated best UE Rx beam for receiving signals from the DL beam. The DL beam and the associated UE Rx beam form a beam pair. The beam pair can be identified through a so-called beam management process in NR.

Generally, a downlink (DL) beam is identified by an associated DL Reference Signal (RS) transmitted in the beam periodically, semi-persistently, or aperiodically. The DL RS for the purpose can be a Synchronization Signal (SS) and Physical Broadcast Channel (PBCH) block (SSB) or a Channel State Information RS (CSI-RS). For each DL RS, a UE can do a Rx beam sweep to determine the best Rx beam associated with the DL beam. The best Rx beam for each DL RS is then memorized by the UE. By measuring all the DL RSs, the UE can determine and report to the gNB the best DL beam to use for DL transmissions.

With the reciprocity principle, the same beam pair can also be used in the UL to transmit a UL signal to the gNB, often referred to as beam correspondence. An example is shown in in Figure 6, where a gNB consists of a transmission / reception point (TRP) with two DL beams each associated with a CSI-RS and one SSB beam. Each of the DL beams is associated with a best UE Rx beam, i.e., Rx beam #1 is associated with the DL beam with CSI-RS #1 and Rx beam #2 is associated with the DL beam with CSI-RS #2.

Due to UE movement or environmental change, the best DL beam for a UE may change over time and different DL beams may be used in different times. The DL beam used for a DL data transmission in PDSCH can be indicated by a TCI field in the corresponding DCI scheduling the PDSCH or activating the PDSCH in case of semi-persistent scheduling (SPS). The TCI field indicates a TCI state which contains a DL RS associated with the DL beam. In the DCI, a Physical Uplink Control Channel (PUCCH) resource is indicated for carrying the corresponding Hybrid Automatic Repeat Request ack/nack (HARQ A/N). The UL beam for carrying the PUCCH is determined by a PUCCH spatial relation activated for the PUCCH resource. For PUSCH transmission, the UL beam is indicated indirectly by a Sounding Reference Signal (SRS) Resource Indicator (SRI), which points to one or more SRS resources associated with the PUSCH transmission. The SRS resource(s) can be periodic, semi-persistent, or aperiodic. Each SRS resource is associated with an SRS spatial relation in which a DL RS (or another periodic SRS) is specified. The UL beam for the PUSCH is implicitly indicated by the SRS spatial relation(s).

### V. TCI State

### A. DL TCI States

Several signals can be transmitted from different antenna ports of a same base station. These signals can have the same large-scale properties such as Doppler shift/spread, average delay spread, or average delay. These antenna ports are then said to be QCL.

If the UE knows that two antenna ports are QCL with respect to a certain parameter (e.g., Doppler spread), the UE can estimate that parameter based on one of the antenna ports and apply that estimate for receiving a signal on the other antenna port. For example, the TCI state may indicate a QCL relation between a CSI-RS for a Tracking RS (TRS) and the PDSCH DMRS. When the UE receives the PDSCH DMRS, the UE can use the measurements already made on the TRS to assist the DMRS reception.

Information about what assumptions can be made regarding QCL is signaled to the UE from the network. In NR, four types of QCL relations between a transmitted source RS and transmitted target RS were defined:
- **Type A:** {Doppler shift, Doppler spread, average delay, delay spread}
- **Type B:** {Doppler shift, Doppler spread}
- **Type C:** {average delay, Doppler shift}
- **Type D:** {Spatial Rx parameter}.

QCL Type D was introduced to facilitate beam management with analog beamforming and is known as spatial QCL. There is currently no strict definition of spatial QCL, but it can be understood that if two transmitted antenna ports are spatially QCL, the UE can use the same Rx beam to receive them. This is helpful for a UE that uses analog beamforming to receive signals, since the UE needs to adjust its Rx beam in some direction prior to receiving a certain signal. If the UE knows that the signal is spatially QCL with some other signal it has received earlier, then the UE can safely use the same Rx beam to receive also this signal.

It should be noted that for beam management, the UE utilizing the same Rx beam generally relates to QCL Type D, but it is also necessary to convey a Type A QCL relation for the RSs to the UE so that the UE can estimate all the relevant large-scale parameters. Typically, this is achieved by configuring the UE with a CSI-RS for tracking (TRS) for time/frequency offset estimation. To be able to use any QCL reference, the UE would have to receive it with a sufficiently good Signal-to-Noise Ratio (SINR). In many cases, this means that the TRS has to be transmitted in a suitable beam to a certain UE.

To introduce dynamics in beam and TRP selection, the UE can be configured through Radio Resource Control (RRC) signaling with M TCI states, where M is up to 128 in frequency range 2 (FR2) for the purpose of PDSCH reception and up to 8 in FR1, depending on UE capability.

Each TCI state contains QCL information, i.e., one or two source DL RSs, each source RS associated with a QCL type. For example, a TCI state contains a pair of reference signals, each associated with a QCL type, e.g., two different CSI-RSs {CSI-RS1, CSI-RS2} are configured in the TCI state as {qcl-Type1, qcl-Type2} = {Type A, Type D}. As such, the UE can derive Doppler shift, Doppler spread, average delay, and delay spread from CSI-RS1 and Spatial Rx parameter (i.e., the RX beam to use) from CSI-RS2.

Each of the M states in the list of TCI states can be interpreted as a list of M possible beams transmitted from the network or a list of M possible TRPs used by the network to communicate with the UE. The M TCI states can also be interpreted as a combination of one or multiple beams transmitted from one or multiple TRPs.

A first list of available TCI states is configured for PDSCH, and a second list of TCI states is configured for PDCCH. Each TCI state contains a pointer, known as a TCI State ID, which points to the TCI state. The network then activates via a Media Access Control (MAC) Control Element (MAC CE) one TCI state for PDCCH (i.e., provides a TCI for PDCCH) and up to eight active TCI states for PDSCH. The number of active TCI states the UE supports is a UE capability, but the maximum is 8.

Each configured TCI state contains parameters for the QCL associations between source reference signals (CSI-RS or SS/PBCH) and target reference signals (e.g., PDSCH/PDCCH DMRS ports). TCI states are also used to convey QCL information for the reception of CSI-RS.

Assume a UE is configured with 4 active TCI states (from a list of totally 64 configured TCI states). Hence, 60 TCI states are inactive for this particular UE (but some may be active for another UE) and the UE need not be prepared to have large-scale parameters estimated for those. But the UE continuously tracks and updates the large-scale parameters for the 4 active TCI states by measurements and analysis of the source RSs indicated by each TCI state. When scheduling a PDSCH to a UE, the DCI contains a pointer to one active TCI. The UE then knows which large-scale parameter estimate to use when performing PDSCH DMRS channel estimation and thus PDSCH demodulation.

### B. TCI State Indication for UE-Specific PDCCH via MAC CE

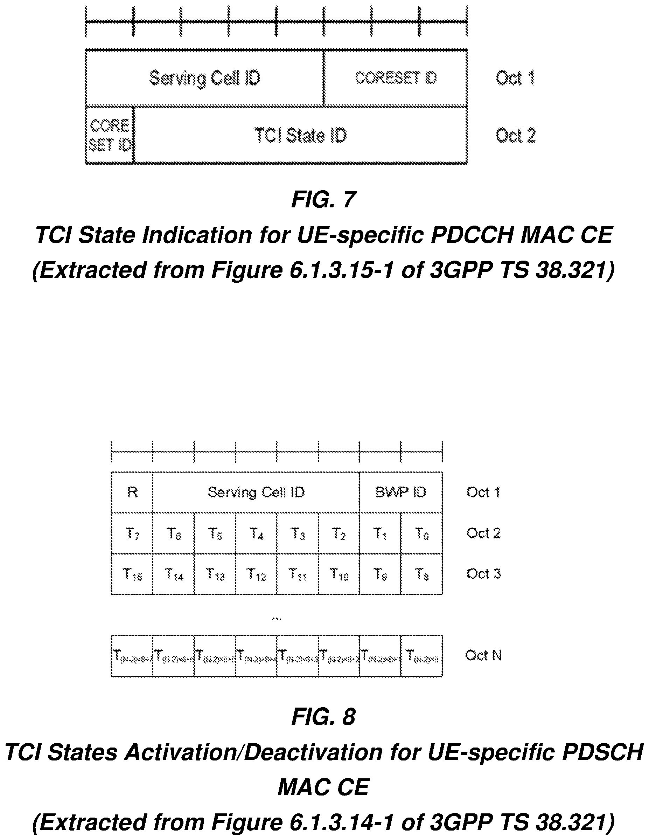

MAC CE signaling is used to indicate the TCI state for UE-specific PDCCH. As an example, Figure 7 illustrates an example structure of the MAC CE for indicating the TCI state for UE-specific PDCCH. As shown in Figure 7, the MAC CE contains the following fields:
- Serving Cell ID: This field indicates the identity of the Serving Cell for which the MAC CE applies. The length of the field is 5 bits.
- CORESET ID: This field indicates a Control Resource Set identified with ControlResourceSetId as specified in 3GPP TS 38.331, for which the TCI State is being indicated. In case the value of the field is 0, the field refers to the Control Resource Set configured by controlResourceSetZero as specified in TS 38.331 [5]. The length of the field is 4 bits.
- TCI State ID: This field indicates the TCI state identified by TCI-StateId as specified in TS 38.331 [5] applicable to the Control Resource Set identified by CORESET ID field. If the field of CORESET ID is set to 0, this field indicates a TCI-StateId for a TCI state of the first 64 TCI-states configured by tci-States-ToAddModList and tci-States-ToReleaseList in the PDSCH-Config in the active BWP. If the field of CORESET ID is set to a value other than 0, this field indicates a TCI-StateId configured by tci-StatesPDCCH-ToAddList and tci-StatesPDCCH-ToReleaseList in the controlResourceSet identified by the indicated CORESET ID. The length of the field is 7 bits.
The MAC CE for Indication of TCI States for UE-specific PDCCH has a fixed size of 16 bits.

It should be noted that the CORESET ID identified with ControlResourceSetId is specified in 3GPP TS38.331 as follows:
- ControlResourceSetId The *ControlResourceSetldIE* concerns a short identity, used to identify a control resource set within a serving cell. The *ControlResourceSetId* = 0 identifies the ControlResourceSet#0 configured via PBCH *(MIB)* and in *controlResourceSetZero* (*ServingCellConfigCommon*). The ID space is used across the BWPs of a Serving Cell. The number of CORESETs per BWP is limited to 3 (including common and UE-specific CORESETs).

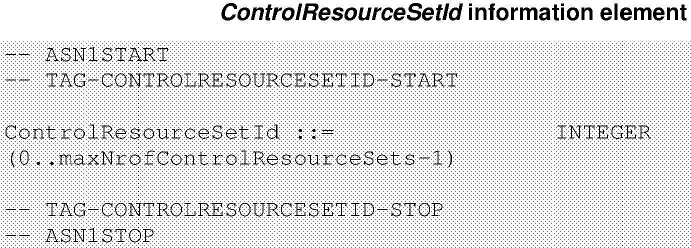

In NR Rel-15, *maxNrofControlResourceSets* representing the maximum number of CORESETs per serving cell is 12. The maximum number of BWPs per serving cell is 4 in NR Rel-15. These maximum values are defined in TS 38.331 Section 6.4 as follows:

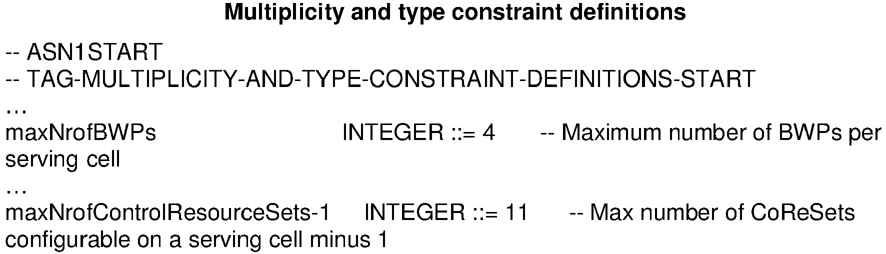

### C. TCI States Activation/Deactivation for UE Specific PDSCH via MAC CE

MAC CE signaling may be used to activate/deactivate TCI states for UE-specific PDSCH. As an example, Figure 8 illustrates an example structure of the MAC CE for activating/deactivating TCI states for UE-specific PDSCH. As illustrated in Figure 8, the MAC CE contains the following fields:
- Serving Cell ID: This field indicates the identity of the Serving Cell for which the MAC CE applies. The length of the field is 5 bits.
- BWP ID: This field contains the ID corresponding to a downlink BWP for which the MAC CE applies. The BWP ID is given by the higher-layer parameter *BWP*-Id as specified in 3GPP TS 38.331. The length of the BWP ID field is 2 bits since a UE can be configured with up to 4 BWPs for DL.

- A variable number of fields *Tᵢ*: If the UE is configured with a TCI state with TCI State ID *i*, then then the field *Tᵢ* indicates the activation/deactivation status of the TCI state with TCI State ID *i*. If the UE is not configured with a TCI state with TCI State ID *i,* the MAC entity shall ignore the *Tᵢ* field. The *Tᵢ* field is set to "1" to indicate that the TCI state with TCI State ID *i* shall be activated and mapped to the codepoint of the DCI *Transmission Configuration Indication* field, as specified in 3GPP TS 38.214. The *Tᵢ* field is set to "0" to indicate that the TCI state with TCI State ID *i* shall be deactivated and is not mapped to the codepoint of the DCI *Transmission Configuration Indication* field. It should be noted that the codepoint to which the TCI State is mapped is determined by the ordinal position among all the TCI States with *Tᵢ* field set to "1". That is the first TCI State with *Tᵢ* field set to "1" shall be mapped to the codepoint value 0 of the DCI *Transmission Configuration Indication* field, the second TCI State with *Tᵢ* field set to "1" shall be mapped to the codepoint value 1 of the DCI *Transmission Configuration Indication* field, and so on. In NR Rel-15, the maximum number of activated TCI states is 8.
- A Reserved bit R: this bit is set to "0" in NR Rel-15.
It should be noted that the TCI States Activation/Deactivation for UE-specific PDSCH MAC CE is identified by a MAC PDU subheader with Logical Channel ID (LCID) as specified in Table 6.2.1-1 of 3GPP TS 38.321. The MAC CE for Activation/Deactivation of TCI States for UE-specific PDSCH has variable size.

### VI. 3Stage Indication of TCI State for PDCCH

A 3-stage approach to activating a TCI state to a CORESET is known (see, for example, R1-2003483, "Preliminary Views on Further Enhancements for NR MIMO," ZTE, RAN1#101-e, May 25th-June 5th, 2020). In the first stage, RRC is used to configure a pool of TCI states. In the second stage, one or more of the RRC-configured TCI states are activated via MAC-CE signaling. Finally, in the third stage, DCI signaling is used to select one of the TCI states that was activated via MAC-CE.

Document "Preliminary views on further enhancement for NR MIMO", ZTE, 3GPP draft, R1-2003483, discloses an evaluation of enhancements of MIMO in Rel-17. Inter alia, the following observations and proposals were made. Observation 1: The current triggering offset definition for aperiodic SRS will cause PDCCH congestion or large latency for SRS triggering. Observation 2: Current specification cannot allow using DCI format 0_1 to triggering SRS without data and without CSI, which restricts gNB's use cases to acquire DL CSI. Observation 3: For UEs supporting combined capability of SRS antenna switching, if the downgrading leads to performance loss, the only thing gNB can do is to reconfigure the SRS resource set for antenna switching. Observation 4: Resource reuse between different usages is beneficial in terms of SRS overhead/usage reduction: simple resource reuse can be done by implementation in Rel-15; for UEs with different numbers of Tx antennas for antenna switching and PUSCH transmission, how to achieve resource reuse is not clear. Proposal 1: To achieve unified TCI state framework, at least the following issues need to be studied: how to indicate spatial relation and power control parameters via TCI state for UL transmission, e.g., PUCCH/PUSCH/SRS; how to indicate additional port information (e.g., associated SRS resource or PUSCH port parameter) via TCI state for PUSCH transmission; how to configure a common TCI state pool for both DL and UL transmission. Proposal 2: For unified TCI framework for both DL and UL (1a), the both of following functionalities should be considered for unified TCI enhancement. (a) There is a common TCI state pool for both DL and UL, but data and control transmission/reception for DL and UL can be separately indicated with an independent TCI state from the pool by channel/RS-dedicated command(s). (b) There is a common TCI state pool for both DL and UL, and both data and control transmission/reception for DL and UL can be indicated with one common TCI state from the pool by a single command. Proposal 3: For fast panel selection, the following aspects should be considered: spatial relation/TCI state including DL RS can be associated with activated panel IDs in the case of beam correspondence, with the assist of UE panel-specific reporting, e.g., group based reporting; sounding procedure for antenna switching can be further studied for supporting UE fast panel switching. Proposal 4: Beam/panel-specific P-MPR is introduced in UL power control framework: study the additional parameter, e.g., CRI/SSBRI or UL power control parameter set, to be reported along with PHR/P-MPR MAC-CE reporting. Proposal 5: For the evaluation of multi-beam operation, the LLS and SLS simulation methodology as agreed for Rel-16 beam management can be considered as a starting point: additionally high UE speed, e.g., 60km/h or 120km/h, can be considered for high-speed scenario in outdoor SLS; UE mobility (physical trajectory with spatial consistency) and blockage models can be considered as add-on features for SLS evaluation; for TXRU mapping to antenna elements & antenna configurations in BS. For Indoor hotspot, the option 2 (per panel per subarray per polarization) is considered (i.e., (M, N, P, Mg, Ng; Mp, Np) = (4,8,2,1,1; 2,2)). For Dense Urban, the option 1 (per panel per polarization) is considered (i.e., (M, N, P, Mg, Ng; Mp, Np) = (4,8,2,2,2; 1,1)): full buffer is considered as traffic model in SLS, but the other model, i.e., FTP model 3, is not precluded.

### Summary

According to the present disclosure, there are provided methods, a wireless communication device and a network node according to the independent claims. Developments are set forth in the dependent claims.

In some embodiments, a method is performed by a wireless communication device. The method includes receiving a configuration of a plurality of Transmission Configuration Indicator (TCI) states via Radio Resource Control (RRC) signaling. The method includes receiving a Media Access Control (MAC) Control Element (CE) that activates a subset of the plurality of TCI states. The method includes receiving a downlink control information (DCI) that indicates one or more of the subset of the plurality of TCI states to be used and explicitly indicates one or more particular Control Resource Sets (CORESETs) for which the one or more of the subset of the plurality of TCI states are to be used. The method includes using one or more spatial quasi colocation (QCL) downlink reference signals contained in the one or more of the subset of the plurality of TCI states to receive a Physical Downlink Control Channel (PDCCH) corresponding to the one or more particular CORESETs.

In some embodiments, the method further includes receiving a configuration of TCI state IDs for the plurality of TCI states, the configuration of the plurality of TCI state IDs being common for two or more Control Resource Sets, CORESETs, or being per CORESET.

In some embodiments, both the configuration of the plurality of TCI states and the configuration of the TCI state IDs are received in a Physical Downlink Shared Channel (PDSCH) Configuration Information Element (PDSCH-CONFIG IE).

In some embodiments, the configuration of the plurality of TCI states applies to all CORESETs configured in a same bandwidth part as the PDSCH-CONFIG IE.

In some embodiments, the MAC CE activates the subset of the plurality of TCI states for all CORESETs configured in a same bandwidth part as the configuration of the plurality of TCI states.

In some embodiments, the MAC CE comprises a bandwidth part ID, a serving cell ID, and TCI state IDs of the subset of the plurality of TCI states activated, but does not include a CORESET ID.

In some embodiments, the MAC CE activates the subset of the plurality of TCI states for all CORESETs configured in a same bandwidth part as that indicated by the bandwidth part ID comprised in the MAC CE.

In some embodiments, the configuration of TCI state IDs for the plurality of TCI states is per CORESET.

In some embodiments, the MAC CE activates up to M TCI states per CORESE.

In some embodiments, the MAC CE comprises a bandwidth part ID, a serving cell ID, TCI state IDs of the subset of the plurality of TCI states activated, and a CORESET ID.

In some embodiments, the DCI comprises a bitfield that indicates the one or more particular CORESETs for which the one or more of the subset of the plurality of TCI states are to be used.

In some embodiments, a TCI update provided by the DCI is applied to CORESETs in two or more serving cells or two or more component carriers, simultaneously.

In some embodiments, the two or more serving cells or the two or more component carriers to which the TCI updated provided by the DCI is to be simultaneously applied are preconfigured.

In some embodiments, the two or more serving cells or the two or more component carriers are indicated by a higher layer parameter.

In some embodiments, the two or more serving cells or the two or more component carriers are indicated by a higher layer parameter, the higher layer parameter indicating that when a TCI state of a particular CORESET is updated via DCI in one serving cell, then TCI state(s) of corresponding CORESET(s) in one or more other serving cells are also to be updated simultaneously.

In some embodiments, the CORESETs in the two or more serving cells or the two or more component carriers are CORESETs in a same CORESET pool as a CORESET implicitly or explicitly indicated by the DCI.

In some embodiments, a wireless communication device is proposed. The wireless communication device is adapted to receive a configuration of a plurality of TCI states via RRC signaling. The wireless communication device is adapted to receive a MAC CE that activates a subset of the plurality of TCI states. The wireless communication device is adapted to receive a DCI that indicates one or more of the subset of the plurality of TCI states to be used and explicitly indicates one or more particular CORESETs for which the one or more of the subset of the plurality of TCI states are to be used. The wireless communication device is adapted to use one or more spatial QCL downlink reference signals contained in the one or more of the subset of the plurality of TCI states to receive a PDCCH corresponding to the one or more particular CORESETs.

In some embodiments, a wireless communication device is proposed. The wireless communication device includes one or more receivers and processing circuitry associated with the one or more receivers. The processing circuitry is configured to cause the wireless communication device to receive a configuration of a plurality of TCI states via RRC signaling. The processing circuitry is configured to cause the wireless communication device to receive a MAC CE that activates a subset of the plurality of TCI states. The processing circuitry is configured to cause the wireless communication device to receive a DCI that indicates one or more of the subset of the plurality of TCI states to be used and explicitly indicates one or more particular CORESETs for which the one or more of the subset of the plurality of TCI states are to be used. The processing circuitry is configured to cause the wireless communication device to use one or more spatial QCL downlink reference signals contained in the one or more of the subset of the plurality of TCI states to receive a PDCCH corresponding to the one or more particular CORESETs.

In some embodiments, a method is performed by a network node. The method includes sending, to a wireless communication device, a configuration of a plurality of TCI states via RRC signaling. The method includes sending, to the wireless communication device, a MAC CE that activates a subset of the plurality of TCI states. The method includes sending, to the wireless communication device, a DCI that indicates one or more of the subset of the plurality of TCI states to be used, and explicitly indicates one or more particular Control Resource Sets, CORESETs, for which the one or more of the subset of the plurality of TCI states are to be used.

In some embodiments, a network node is proposed. The network node is adapted to send, to a wireless communication device, a configuration of a plurality of TCI states via RRC signaling. The network node is adapted to send, to the wireless communication device, a MAC CE that activates a subset of the plurality of TCI states. The network node is adapted to send, to the wireless communication device, a DCI that indicates one or more of the subset of the plurality of TCI states to be used, and explicitly indicates one or more particular Control Resource Sets, CORESETs, for which the one or more of the subset of the plurality of TCI states are to be used.

In some embodiments, a network node is proposed. The network node is includes processing circuitry. The processing circuitry is configured to cause the network node to send, to a wireless communication device, a configuration of a plurality of TCI states via RRC signaling. The processing circuitry is configured to cause the network node to send, to the wireless communication device, a MAC CE that activates a subset of the plurality of TCI states. The processing circuitry is configured to cause the network node to send, to the wireless communication device, a DCI that indicates one or more of the subset of the plurality of TCI states to be used, and explicitly indicates one or more particular Control Resource Sets, CORESETs, for which the one or more of the subset of the plurality of TCI states are to be used.

### Brief Description of the Drawings

The accompanying drawing figures incorporated in and forming a part of this specification illustrate several aspects of the disclosure, and together with the description serve to explain the principles of the disclosure.
Figure 1 illustrates an example of per-slot basis data scheduling in New Radio (NR);
Figure 2 illustrates an example of slot durations at different subcarrier spacings;
Figure 3 illustrates an example basic NR physical time-frequency resource grid, where only one Resource Block (RB) within a 14-symbol slot is shown;
Figure 4 illustrates an example structure of a Synchronization Signal Block (SSB), which includes one Primary Synchronization Signal (PSS), one Secondary Synchronization Signal (SSS), and a Physical Broadcast Channel (PBCH);
Figure 5 illustrates cell coverage using a single SSB and multiple beamformed SSBs;
Figure 6 illustrates an example of transmission and reception with multiple beams;
Figure 7 illustrates an example structure of a Medium Access Control (MAC) Control Element (CE) for indicating the Transmission Configuration Indicator (TCI) state for User Equipment (UE) specific Physical Downlink Control Channel (PDCCH);
Figure 8 illustrates an example structure of a MAC CE for activating/deactivating TCI states for UE-specific Physical Downlink Shared Channel (PDSCH);
Figure 9 illustrates a timeline for updating the TCI state of a Control Resource Set (CORESET) using MAC-CE signaling based on a SSB beam sweep and aperiodic SSB beam sweep report;
Figure 10 illustrates one example of a cellular communications system in which embodiments of the present disclosure may be implemented according to some embodiments of the present disclosure;
Figure 11 illustrates a wireless communication system represented as a Fifth Generation (5G) network architecture composed of core Network Functions (NFs), where interaction between any two NFs is represented by a point-to-point reference point/interface according to some embodiments of the present disclosure;
Figure 12 illustrates a 5G network architecture using service-based interfaces between the NFs in the Control Plane (CP), instead of the point-to-point reference points/interfaces used in the 5G network architecture of Figure 11 according to some embodiments of the present disclosure;
Figure 13 is a flowchart for a first option for a method for configuration and activation of TCI states for CORESET according to some embodiments of the present disclosure;
Figure 14 is a flowchart for a second option for a method for configuration and activation of TCI states for CORESET according to some embodiments of the present disclosure;
Figure 15 is a flowchart for a method for implicit update of CORESET TCI according to some embodiments of the present disclosure;
Figure 16 is a flowchart for a method for explicit update of CORESET TCI according to some embodiments of the present disclosure;
Figure 17 is a schematic block diagram of a radio access node 1700 according to some embodiments of the present disclosure;
Figure 18 is a schematic block diagram that illustrates a virtualized embodiment of the radio access node according to some embodiments of the present disclosure;
Figure 19 is a schematic block diagram of the radio access node 1700 according to some other embodiments of the present disclosure;
Figure 20 is a schematic block diagram of a wireless communication device according to some embodiments of the present disclosure;
Figure 21 is a schematic block diagram of the wireless communication device according to some other embodiments of the present disclosure;
Figure 22 is a flowchart for a method performed by a wireless communication device in accordance with some embodiments of the present disclosure; and
Figure 23 is a flowchart for a method performed by a base station in accordance with some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenges. In Rel-15/16 NR, a Medium Access Control (MAC) Control Element (CE) message can be used to update the Transmission Configuration Indicator (TCI) state for a given Control Resource Set (CORESET) by indicating one out of the 64 first TCI-states configured by tci-States-ToAddModList and tci-States-ToReleaseList in the PDSCH-Config (see 3GPP TS 38.331) in the active Bandwidth Part (BWP). Even though MAC-CE based TCI state update is quicker compared to Radio Resource Control (RRC) signaling, it is still associated with significant delays.

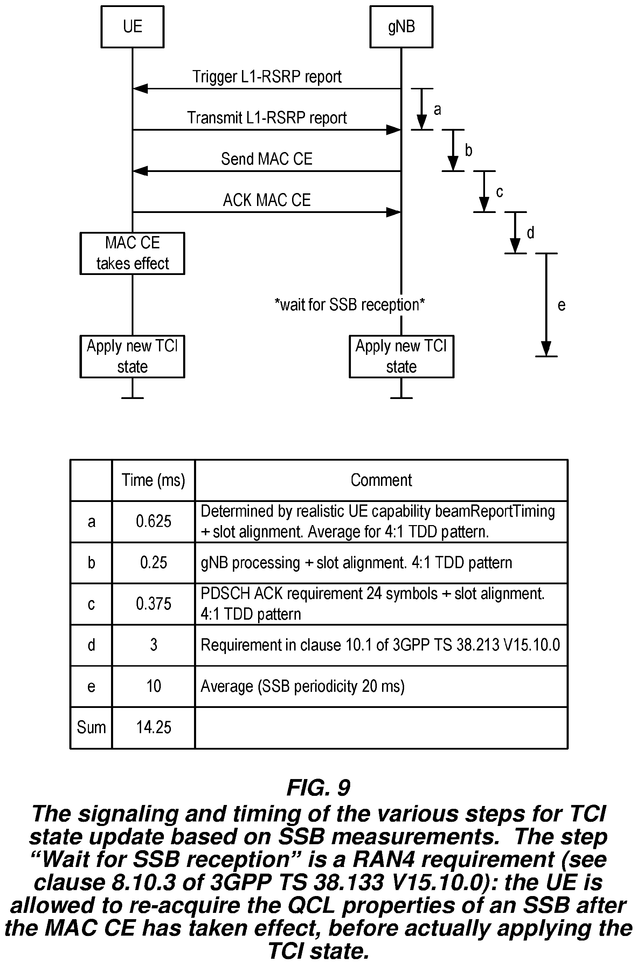

Figure 9 illustrates a timeline for updating the TCI state of a CORESET using MAC-CE signaling based on a Synchronization Signal Block (SSB) beam sweep and aperiodic SSB beam sweep report. As illustrated, the delay is dominated by the MAC CE application delay and the delay for the UE to reacquire the Quasi Co-Location (QCL) properties of the Reference Signals (RSs) in the activated TCI state.

One possible way to speed up the TCI state update of a CORESET is to introduce a Downlink Control Information (DCI) based TCI state update framework, in a similar way as TCI state updates of Physical Downlink Shared Channel (PDSCH) in Rel-15. By using DCI to indicate one out of M activated TCI states, delays associated with MAC-CE based TCI state update can be significantly reduced since the RAN4 requirement (in clause 8.10.3 of 3GPP TS 38.133) to wait for the new transmission of the RSs in the selected TCI state is not required when DCI is used to select one out of M activated TCI states.

However, since there may be several CORESETs configured for a certain UE for a given BWP, the existing solutions do not solve the issue of how the UE will know to which CORESET the DCI based TCI state update should be applied. Hence, this is an open problem. Although R1-2003483 discusses a general three-stage (i.e., RRC+MAC CE+DCI) framework for indication of TCI state for PDCCH, it does not provide configuration/signaling details for the RRC+MAC CE+DCI framework. Hence, the configuration/signaling details of the RRC+MAC CE+DCI framework is also an open problem that needs to be solved.

Certain aspects of the present disclosure and their embodiments may provide solutions to the aforementioned or other challenges. The solution in this disclosure proposes a framework for indicating which CORESET a TCI state update is referring to when the TCI state is updated with DCI. The framework also provides configuration/signaling details for three-stage indication (i.e., RRC+MAC CE+DCI) of TCI state for CORESETs. The solution in this disclosure proposes a framework for indicating to which CORESET a TCI state update is referring when the TCI state is updated with DCI.

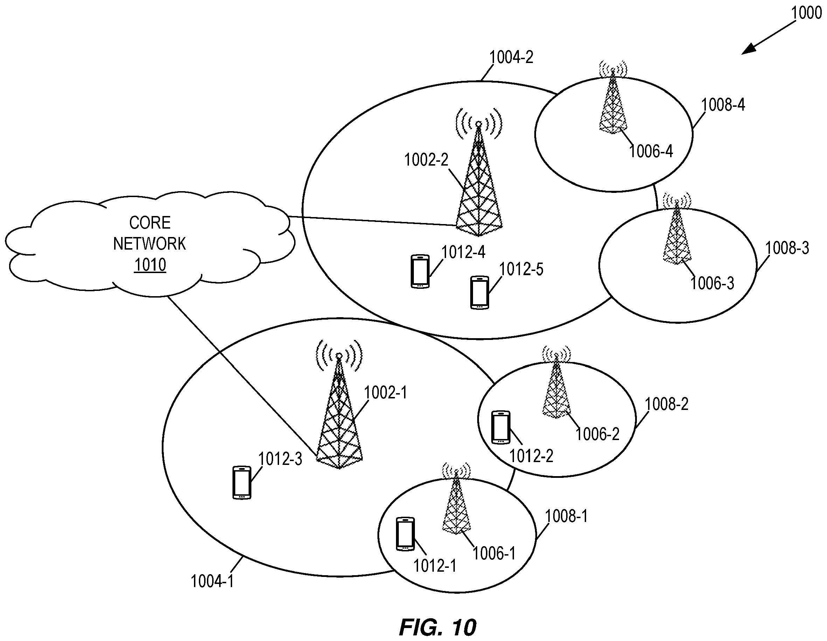

Figure 10 illustrates one example of a cellular communications system 1000 in which embodiments of the present disclosure may be implemented. In the embodiments described herein, the cellular communications system 1000 is a 5G system (5GS) including a Next Generation RAN (NG-RAN) and a 5G Core (5GC) or an Evolved Packet System (EPS) including an Evolved Universal Terrestrial RAN (E-UTRAN) and an Evolved Packet Core (EPC). In this example, the RAN includes base stations 1002-1 and 1002-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 1004-1 and 1004-2. The base stations 1002-1 and 1002-2 are generally referred to herein collectively as base stations 1002 and individually as base station 1002. Likewise, the (macro) cells 1004-1 and 1004-2 are generally referred to herein collectively as (macro) cells 1004 and individually as (macro) cell 1004. The RAN may also include a number of low power nodes 1006-1 through 1006-4 controlling corresponding small cells 1008-1 through 1008-4. The low power nodes 1006-1 through 1006-4 can be small base stations (such as pico or femto base stations) or Remote Radio Heads (RRHs), or the like. Notably, while not illustrated, one or more of the small cells 1008-1 through 1008-4 may alternatively be provided by the base stations 1002. The low power nodes 1006-1 through 1006-4 are generally referred to herein collectively as low power nodes 1006 and individually as low power node 1006. Likewise, the small cells 1008-1 through 1008-4 are generally referred to herein collectively as small cells 1008 and individually as small cell 1008. The cellular communications system 1000 also includes a core network 1010, which in the 5G System (5GS) is referred to as the 5GC. The base stations 1002 (and optionally the low power nodes 1006) are connected to the core network 1010.

The base stations 1002 and the low power nodes 1006 provide service to wireless communication devices 1012-1 through 1012-5 in the corresponding cells 1004 and 1008. The wireless communication devices 1012-1 through 1012-5 are generally referred to herein collectively as wireless communication devices 1012 and individually as wireless communication device 1012. In the following description, the wireless communication devices 1012 are oftentimes UEs and as such sometimes referred to herein as UEs 1012, but the present disclosure is not limited thereto.

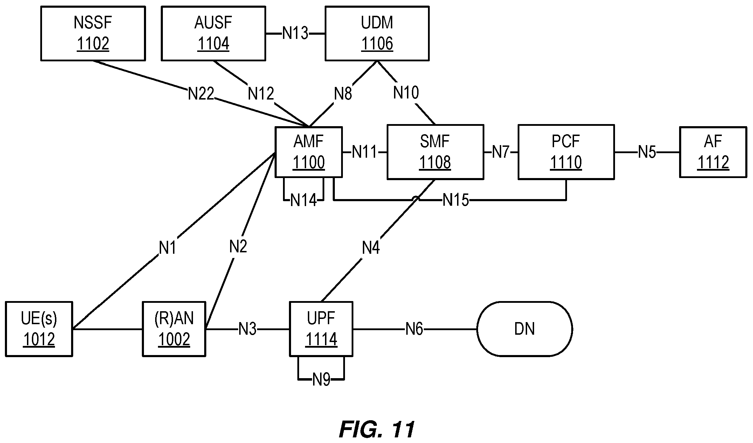

Figure 11 illustrates a wireless communication system represented as a 5G network architecture composed of core Network Functions (NFs), where interaction between any two NFs is represented by a point-to-point reference point/interface. Figure 11 can be viewed as one particular implementation of the system 1000 of Figure 10.

Seen from the access side, the 5G network architecture shown in Figure 11 comprises a plurality of UEs 1012 connected to either a RAN 1002 or an Access Network (AN) as well as an AMF 1100. Typically, the R(AN) 1002 comprises base stations, e.g., such as eNBs or gNBs or similar. Seen from the core network side, the 5GC NFs shown in Figure 11 include a NSSF 1102, an AUSF 1104, a UDM 1106, the AMF 1100, a SMF 1108, a PCF 1110, and an Application Function (AF) 1112.

Reference point representations of the 5G network architecture are used to develop detailed call flows in the normative standardization. The N1 reference point is defined to carry signaling between the UE 1012 and AMF 1100. The reference points for connecting between the AN 1002 and AMF 1100 and between the AN 1002 and UPF 1114 are defined as N2 and N3, respectively. There is a reference point, N11, between the AMF 1100 and SMF 1108, which implies that the SMF 1108 is at least partly controlled by the AMF 1100. N4 is used by the SMF 1108 and UPF 1114 so that the UPF 1114 can be set using the control signal generated by the SMF 1108, and the UPF 1114 can report its state to the SMF 1108. N9 is the reference point for the connection between different UPFs 1114, and N14 is the reference point connecting between different AMFs 1100, respectively. N15 and N7 are defined since the PCF 1110 applies policy to the AMF 1100 and SMF 1108, respectively. N12 is required for the AMF 1100 to perform authentication of the UE 1012. N8 and N10 are defined because the subscription data of the UE 1012 is required for the AMF 1100 and SMF 1108.

The 5GC network aims at separating UP and CP. The UP carries user traffic while the CP carries signaling in the network. In Figure 11, the UPF 1114 is in the UP and all other NFs, i.e., the AMF 1100, SMF 1108, PCF 1110, AF 1112, NSSF 1102, AUSF 1104, and UDM 1106, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 1100 and SMF 1108 are independent functions in the CP. Separated AMF 1100 and SMF 1108 allow independent evolution and scaling. Other CP functions like the PCF 1110 and AUSF 1104 can be separated as shown in Figure 11. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

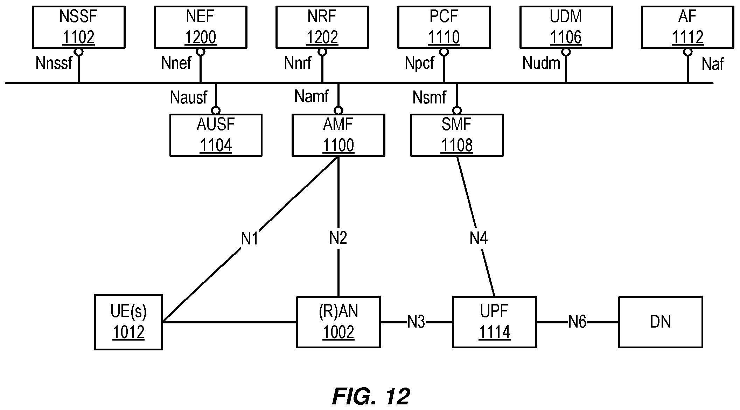

Figure 12 illustrates a 5G network architecture using service-based interfaces between the NFs in the CP, instead of the point-to-point reference points/interfaces used in the 5G network architecture of Figure 11. However, the NFs described above with reference to Figure 11 correspond to the NFs shown in Figure 12. The service(s) etc. that a NF provides to other authorized NFs can be exposed to the authorized NFs through the service-based interface. In Figure 12 the service based interfaces are indicated by the letter "N" followed by the name of the NF, e.g., Namf for the service based interface of the AMF 1100 and Nsmf for the service based interface of the SMF 1108, etc. The NEF 1200 and the NRF 1202 in Figure 12 are not shown in Figure 11 discussed above. However, it should be clarified that all NFs depicted in Figure 11 can interact with the NEF 1200 and the NRF 1202 of Figure 12 as necessary, though not explicitly indicated in Figure 11.

Some properties of the NFs shown in Figures 11 and 12 may be described in the following manner. The AMF 1100 provides UE-based authentication, authorization, mobility management, etc. A UE 1012 even using multiple access technologies is basically connected to a single AMF 1100 because the AMF 1100 is independent of the access technologies. The SMF 1108 is responsible for session management and allocates Internet Protocol (IP) addresses to UEs. It also selects and controls the UPF 1114 for data transfer. If a UE 1012 has multiple sessions, different SMFs 1108 may be allocated to each session to manage them individually and possibly provide different functionalities per session. The AF 1112 provides information on the packet flow to the PCF 1110 responsible for policy control in order to support Quality of Service (QoS). Based on the information, the PCF 1110 determines policies about mobility and session management to make the AMF 1100 and SMF 1108 operate properly. The AUSF 1104 supports authentication function for UEs or similar and thus stores data for authentication of UEs or similar while the UDM 1106 stores subscription data of the UE 1012. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

When updating the TCI state for a CORESET using DCI, it is expected that M TCI states are activated (in a similar way as 8 TCI states can be activated for PDSCH in from Rel-15) via a MAC CE, and that different codepoints in a new bit field in a DCI is used to select one of the activated TCI states.

### I. Configuration and Activation of TCI States for CORESET

In some embodiments, TCI states can be configured and activated for a CORESET. Multiple embodiments are provided for this configuration/signaling of the 3-stage (RRC+MAC CE+DCI) framework.

### A. Option 1

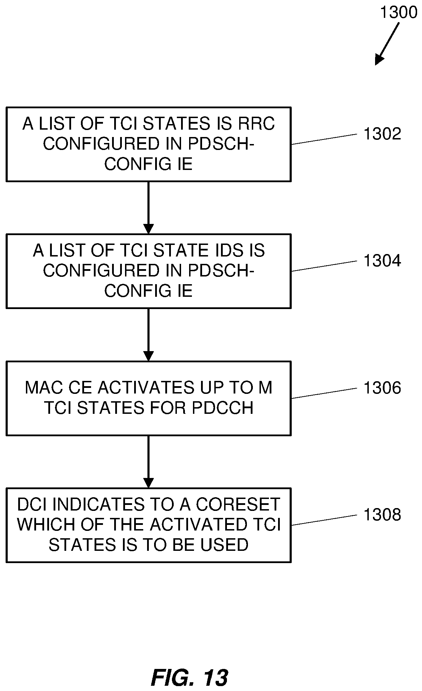

At a high level, this option is presented as a process 1300 in a flowchart in Figure 13. Initially, a list of TCI states is RRC configured in PDSCH-CONFIG information element (IE) (step 1302). A list of TCI state IDs is configured in PDSCH-CONFIG IE (step 1304). The MAC CE activates up to M TCI states for PDCCH (step 1306), and the DCI indicates for a CORESET which of the activated TCI states is to be used (step 1308).

More specifically, in this option, at step 1302, a list of TCI states is RRC configured in the *'PDSCH-Config'* IE, and at step 1304, a corresponding list of TCI state identifiers (i.e., TCI state IDs) is also configured in the *'PDSCH-Config*'IE*.* It should be noted that this option differs from how TCI state identifiers are configured for PDCCH conventionally in NR, since this option does not require the TCI state identifiers to be configured per CORESET (or *ControlResourceSet*)*.* Additionally, it should be noted that in NR Rel-15/16, a list of TCI state IDs is configured per CORESET. This list of TCI state IDs configured in each CORESET points to a subset of TCI state IDs configured in PDSCH-config.

In one variant of this option, at step 1304, a list of TCI state IDs is directly configured in the PDCCH-Config and this list of TCI state IDs applies to all CORESETs in the BWP in which the PDCCH-Config is configured. In some embodiments, this list of TCI state IDs may point to a subset of the TCI states or TCI state IDs configured in the PDSCH-config included in the same *BWP-DownlinkDedicated* in which the PDCCH-Config is configured.

In another variant of this option, the list of TCI states or the list of TCI state IDs configured in the PDSCH-Config in the same BWP in which the CORESETs are configured is reused to apply to all the CORESETs in the said BWP. This can be specified by different ways. One way is to configure in PDCCH-Config the same set of TCI states as in PDSCH-Config. Another way is to specify in the field description of IE ControlResourceSet that in the absence of a TCI state ID list, the same set of TCI states is assumed as in the PDSCH-Config which is configured in the same *BWP-DownlinkDedicated.* Another way is to configure a parameter, e.g., in PDCCH-Config, which informs the UE to use the same set of TCI states as is configured in the PDSCH-Config belonging to the same *BWP-DownlinkDedicated.* Yet another way is to specify in the RAN1 specification what the UE assumes, e.g., based on a UE capability.

At step 1306, in the second stage, a MAC CE activates up to M TCI states configured in the first stage. The MAC CE indicates up to M TCI state identifiers (corresponding to the M TCI states to be activated) from the configured TCI state identifier list in the first stage. Note that the M activated TCI states here are common for all the CORESETs configured in the same BWP (bandwidth part) as the 'PDSCH-Config'. That is, given CORESET#1 and CORESET#2 are configured in the same BWP as the 'PDSCH_Config', then the following are possible:
- Any one of the M activated TCI states can be indicated to CORESET#1 in stage 3 via DCI.
- Any one of the M activated TCI states can be indicated to CORESET#2 in stage 3 via DCI.

Hence, in an alternative for the 2^{nd} stage, at step 1306, when the MAC CE activates the M TCI states for PDCCH, the MAC CE needs to provide the BWP ID, the Serving Cell ID, and the identifiers of the TCI states to be activated for PDCCH. The CORESET ID does not need to be provided in the MAC CE in this option. This is different from the Rel-15 MAC CE (shown in Figure 7) that activates the TCI state for a CORESET in which case the CORESET ID is provided in the Rel-15 MAC CE.

Another alternative for the 2^{nd} stage is, at step 1306, to reuse the Rel-15 PDSCH MAC CE shown in Figure 8 to indicate the activated TCI states for the CORESETs. Note that the CORESET ID is not provided in the MAC CE in Figure 8, hence the TCI states activated via the MAC CE of Figure 8 apply to all CORESETs in the same BWP as the BWP ID indicated in the MAC CE of Figure 8. Note that in this alternative, the same set of TCI states is activated for PDSCH and all the CORESETs in the same BWP given by the BWP ID of the MAC CE. In some embodiments, the UE is configured by higher layers so that it uses the same set of activated TCI states provided by the MAC CE of Figure 8 for PDSCH as well as all the CORESETs belonging to the same BWP.

In another alternative, the MAC CE from Rel-15 for CORESET is reused but the fields are configured to be interpreted in another way. The UE ignores the field for a CORESET ID and interprets the field for TCI state ID as a bitmap which can activate M>1 TCI states from a list of TCI states. In a variant, the CORESET ID field and TCI state field are used together to indicate to the UE the activated TCI states. As a generalization, a MAC CE is defined where the LCID maps the MAC CE to a purpose, such as updating a TCI state for PDCCH. Part of the fields are fixed like today, like serving cell ID and bandwidth part ID. Part of the fields are RRC configurable with a max size. For example, a field for CORESET ID can be present or not, and the field for TCI state ID is configurable. The configurability of a MAC CE field can be generalized to any MAC CE.

At step 1308, in stage 3, any one of the M TCI states activated in stage 2 can be indicated to a CORESET via DCI. To which CORESET the indicated TCI state in DCI applies is determined via Embodiments described in Sections II and III below.

Note that the list of TCI states and the corresponding list of TCI state identifiers in the first stage can also be configured in other places instead of *'PDSCH-Config'.* For instance, these lists may be configured in the BWP level in one of the following IEs in 3GPP TS 38.331: *BWP-Downlink* or *BWP-DownlinkDedicated,* orPDCCH-Config.

Note that in this option, only up to MTCI states can be activated for PDCCH (i.e., CORESETs carrying PDCCH) per BWP. The maximum number of TCI states that can be activated for PDCCH per BWP can be reported by the UE as part of UE capability, and an explicit parameter may be configured by the gNB to the UE to indicate the maximum number of TCI states that can be activated for PDCCH.

### B. Option 2

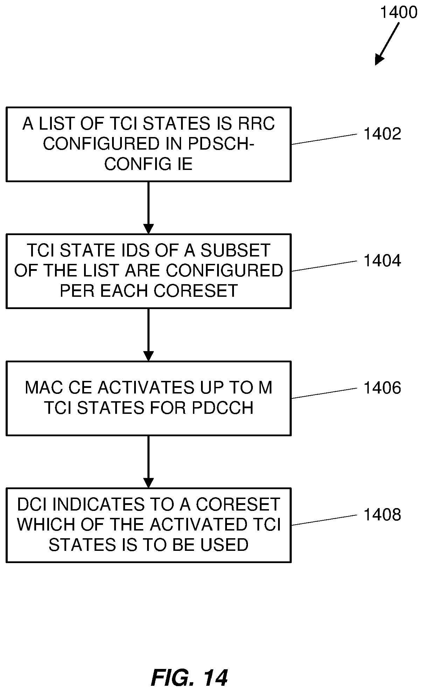

At a high level, this option is presented as a process 1400 in a flowchart in Figure 14. Initially, a list of TCI states is RRC configured in PDSCH-CONFIG IE (step 1402). TCI state IDs of a subset of the list are configured per each CORESET (step 1404). The MAC CE activates up to M TCI states for PDCCH (step 1406), and the DCI indicates for a CORESET which of the activated TCI states is to be used (step 1408).

More specifically, in this option, in the first stage, at step 1402, a list of TCI states is RRC configured in the *'PDSCH-Config'*IE*.* At step 1404, the TCI state identifiers corresponding to a subset of the TCI states configured in *'PDSCH-Config'*are then configured per each CORESET (i.e., in the *ControlResourceSet*)*.*

In the second stage, at step 1406, a MAC CE activates up to M TCI states per each CORESET from the subset of TCI state identifiers configured in the first stage. Note that there can be up to M activated TCI states for each CORESET. Hence, the total number of TCI states activated for all the CORESETs configured in the same BWP can be up to N*M where N is the number of CORESETs configured in the BWP.

Hence, in this option, when the MAC CE activates the M TCI states for PDCCH per CORESET, the MAC CE needs to provide the BWP ID, the Serving Cell ID, the CORESET ID, and the identifiers of the TCI states to be activated for PDCCH. This is different from the Rel-15 MAC CE that activates the TCI state for a CORESET in which case only 1 TCI state is activated in the Rel-15 MAC CE per CORESET. In contrast, in this option, up to M TCI states for PDCCH can be activated per CORESET via a new MAC CE that is different from the Rel-15 MAC CE (i.e., the MAC CE in Figure 7).

Another alternative to introducing a new MAC CE for this option is to reuse the Rel-15 MAC CE in Figure 7 where the TCI field is interpreted differently. In this alternative, each bit in the 7-bit TCI ID field is interpreted as a different TCI state. Hence, up to 7 TCI states can be configured per each CORESET, and up M=7 TCI states can be activated in this alternative. The first bit in the TCI field of the Rel-15 MAC CE is interpreted as an activation/deactivation indication bit for the first TCI state configured for the CORESET for which the TCI state activation command is provided (i.e., the CORESET corresponding to the CORESET ID provided in the MAC CE). Similarly, the second bit in the TCI field of the Rel-15 MAC CE is interpreted as an activation/deactivation indication bit for the second TCI state configured for the CORESET for which the TCI state activation command is provided (i.e., the CORESET corresponding to the CORESET ID provided in the MAC CE), etc.

In stage 3, at step 1408, any one of the M TCI states activated in stage 2 can be indicated to a CORESET via DCI. To which CORESET the indicated TCI state in DCI applies is determined via Embodiments 2-3 described below.

Note that the list of TCI states in the first stage can also be configured in other places instead of *'PDSCH_Config'.* For instance, these lists may be configured in the BWP level in one of the following IEs in 3GPP TS 38.331: *BWP-Downlinkor BWP-DownlinkDedicated,* or PDCCH-Config.

It should be noted that in this option, up to N*M TCI states can be activated for PDCCH (i.e., CORESETs carrying PDCCH) per BWP. The total maximum number of TCI states that can be activated for PDCCH (over all CORESETs) per BWP can be reported by the UE as part of UE capability, and an explicit parameter may be configured by the gNB to the UE to indicate the total maximum number of TCI states that can be activated per BWP.

### II. Implicit Update of CORESET TCI

In this embodiment, which is not according to the invention, the CORESET in which a PDCCH carrying the DCI containing the TCI state update is received is also the CORESET for which the TCI state is updated. For example, assume that a UE is configured with two CORESETs; CORESET#1 and CORESET#2. Assume further that CORESET#1 has one currently used TCI state called TCI state# 1 and that CORESET#2 has one currently used TCI state called TCI state #4. If we want to update the TCI state for CORESET# 1 we can transmit the DCI carrying the codepoint for TCI state update in a PDCCH received in CORESET#1. The UE will then know that the TCI state update indicated in the DCI in the received PDCCH should be applied to CORESET# 1.

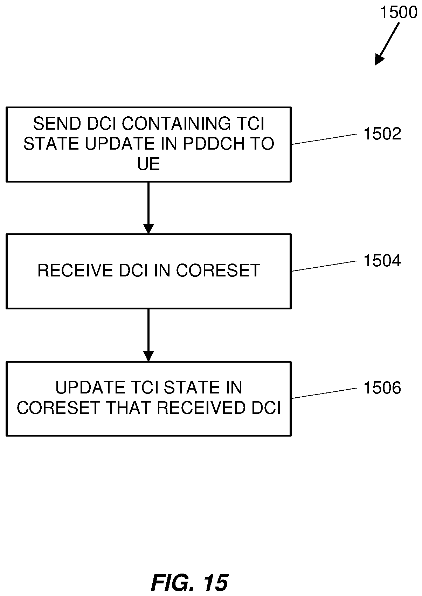

More generally, this may be seen in process 1500 illustrated in Figure 15 where a DCI containing a TCI state update in the PDDCH is sent to the UE (step 1502). The DCI is received in a CORESET (step 1504), and the TCI state in the CORESET that received the DCI is updated (step 1506).

### III. Explicit Update of CORESET TCI

In this embodiment, which is according to the invention, a new bitfield is included in the DCI indicating the TCI state update that points to one of the configured CORESETs. The size of the new bitfield can depend on the number of configured CORESETs per BWP for that UE. For example, if the UE is configured with two CORESETs, the bitfield can consist of a single bit, where the codepoint "0" would point to the CORESET with lowest ID, and the codepoint "1" would point at the CORESET with highest ID.

In case only a single CORESET is defined, no bitfield is needed, and the UE then updates the TCI state of the single CORESET.

One potential problem with the implicit update of CORESET TCI, as described previously, is that in case the beam pair link associated with a certain CORESET has become blocked, we might not be able to reach the UE with a DCI using that CORESET, prohibiting a TCI state update for that CORESET. With explicit updating of CORESET TCI, the TCI state of the blocked CORESET is able to be updated with a DCI received in a second CORESET. However, the extra flexibility provided by implicit updating of the CORESET TCI comes with a cost of extra DCI overhead due to the additional bitfield.

If DCI format 1_0 is used to carry the TCI update information, a new radio network temporary identifier (RNTI) may be introduced such that the UE applies the same DCI length 1_0 when decoding the PDCCH, but descrambles the Cyclic Redundancy Check (CRC) with the new RNTI in order to differ the field interpretation from other RNTIs. An acknowledgement (ACK) is expected from a UE for receiving and successfully decoding the DCI.

If PDSCH data is indicated in this DCI, the ACK for the PDSCH can be anchored as the time the UE starts to apply the TCI switch of the CORESET. The anchoring of the TCI switch time can also be the time/slot/symbol when PDCCH transmitting the TCI update information is received, an ACK may be sent via PUCCH or MAC CE via PUSCH.

It can be assumed that the new RNTI is called TCI-RNTI. When TCI-RNTI for a UE is configured by higher layer, the following information may be transmitted by means of the DCI format 1_0 with CRC scrambled with TCI-RNTI:
- TCI field
- CORESET ID field
- SRI field
- UL channel indication field
- Time to apply the beam switch
- Time to send ACK via PUCCH

Hence, when the CRC of DCI format 1_0 is scrambled with TCI-RNTI, then the TCI field and the CORESET ID field can be both present in the DCI. These fields can be used to indicate the TCI state to be updated (provided via the TCI field in DCI) and the CORESET to which the TCI state update applies (provided via the CORESET ID field in DCI). Although this embodiment is written in terms of DCI format 1_0, it can be generalized to other DCI formats as well (e.g., DCI format 0_0, etc.).

### IV. Simultaneous Update of TCI State for CORESET in Multiple Serving Cells Via DCI

In this embodiment, a DCI containing the TCI state update is applied to CORESETs in multiple serving cells (or component carriers, CC) simultaneously. In one embodiment, a list of serving cells for the purpose of simultaneously updating TCI states for CORESETs is preconfigured for the UE. Now, consider the case when the UE receives a DCI containing a TCI state update for a CORESET where the CORESET for which the TCI update in DCI applies may be determined according to the embodiments described in Sections II or II of the Detailed Description above. If the serving cell of the CORESET for which the TCI state update is performed belongs to the list of serving cells, then the TCI state update indicated by the DCI also applies to the corresponding CORESETs in all the serving cells in the list of serving cells. Note that this may reuse one of the existing lists of serving cells in IE CellGroupConfig such as simultaneousTCI-UpdateList1, simultaneousTCI-UpdateList2 (as defined in 3GPP TS 38.331), or a new list may be defined.

In an alternative embodiment, a higher-layer parameter (e.g., RRC parameter) may be configured by the gNB to the UE such that when a TCI state of a CORESET is updated via DCI in one serving cell, then the TCI states of the corresponding CORESETs in all serving cells configured for the UE in sCellToAddModList in IE CellGroupConfig (as defined in 3GPP TS 38.331) are also updated simultaneously.

In yet another alternative embodiment, the CORESETs are grouped into multiple pools and each CORESET is configured with a CORESET pool index. The CORESET pool index may be configured across serving cells. In this alternative embodiment, when a TCI state of a CORESET corresponding to one CORESET pool is updated via DCI, then the TCI state of the other CORESETs with the same CORESET pool index are also updated simultaneously.

Simultaneously updating TCI states of CORESETs in multiple serving cells is beneficial as it can significantly reduce the TCI state activation delay in multiple serving cells. For instance, updating the TCI state for each serving cell may consume large delays in addition to control signaling overhead for performing these TCI state updates on a per cell basis. However, simultaneous updates of TCI states for CORESETs across multiple serving cells can significantly reduce these delays and at the same time reduce control signaling overhead. The above embodiments apply also in PDCCH-Config or BWP level. That is, the UE may be updated with a TCI state for all CORESETs as described in embodiment 1. Then, if this PDCCH-Config belongs to a BWP which belongs to a serving cell listed in a RRC configured list, any of sCellToAddModList, simultaneousTCI-UpdateList1, simultaneousTCI-UpdateList2 (as defined in 3GPP TS 38.331), or a new list, all cells, and the BWPs within are updated in a similar manner. In another embodiment, if the list of serving cells in simultaneousTCI-UpdateList1 or simultaneousTCI-UpdateList2 (as defined in 3GPP TS 38.331), or a new list for this purpose, only consists of one serving cell and the UE receives the MAC CE or DCI to update TCI state related to PDCCH, the UE applies the update for all BWPs in that serving cell.

In another embodiment, in a particular cell, the TCI state update is performed across BWPs even if a list of cells is not configured. That is, the UE is only configured with sCellToAddModList in IE CellGroupConfig and that list only has one cell, i.e., the UE is only configured with PSCell. In order to enable updating the TCI state across BWPs of the PCell, the UE is configured with a new RRC parameter to indicate this operation to the UE. Further, even though this disclosure is for PDCCH, this embodiment can be applied to PDSCH, PUCCH, and PUSCH as well. The RRC parameter may be separate for all of these, or there is one parameter with different values specific to different DL/UL channels.

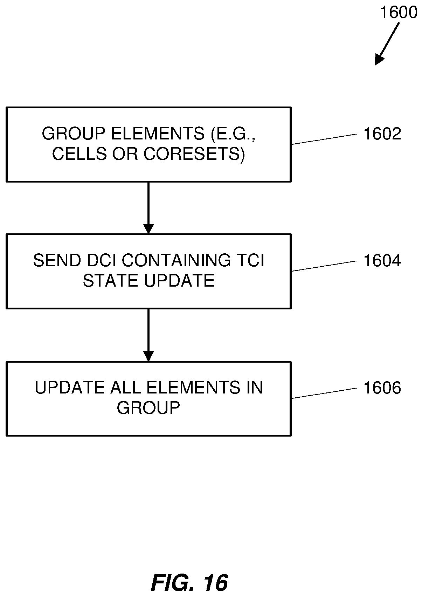

More generally, this embodiment is illustrated as process 1600 in Figure 16. The process 1600 starts by grouping elements (e.g., multiple cells or CORESETS) (step 1602). A DCI is sent containing a TCI update (step 1604). On receipt of the DCI, all the elements of the group are updated (step 1606).

### V. Further Description

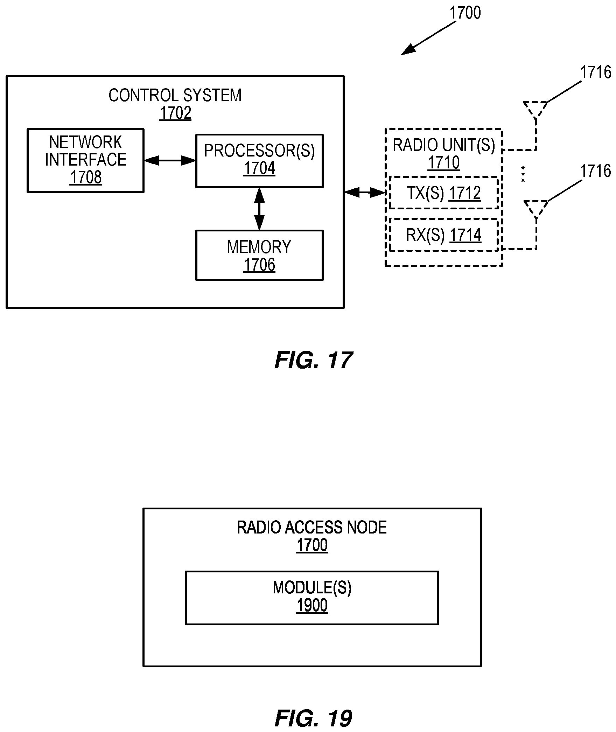

Figure 17 is a schematic block diagram of a radio access node 1700 according to some embodiments of the present disclosure. Optional features are represented by dashed boxes. The radio access node 1700 may be, for example, a base station 1002 or 1006 or a network node that implements all or part of the functionality of the base station 1002 or gNB described herein. As illustrated, the radio access node 1700 includes a control system 1702 that includes one or more processors 1704 (e.g., Central Processing Units (CPUs), Application Specific Integrated Circuits (ASICs), Field Programmable Gate Arrays (FPGAs), and/or the like), memory 1706, and a network interface 1708. The one or more processors 1704 are also referred to herein as processing circuitry. In addition, the radio access node 1700 may include one or more radio units 1710 that each includes one or more transmitters 1712 and one or more receivers 1714 coupled to one or more antennas 1716. The radio units 1710 may be referred to or be part of radio interface circuitry. In some embodiments, the radio unit(s) 1710 is external to the control system 1702 and connected to the control system 1702 via, e.g., a wired connection (e.g., an optical cable). However, in some other embodiments, the radio unit(s) 1710 and potentially the antenna(s) 1716 are integrated together with the control system 1702. The one or more processors 1704 operate to provide one or more functions of a radio access node 1700 as described herein. In some embodiments, the function(s) are implemented in software that is stored, e.g., in the memory 1706 and executed by the one or more processors 1704.

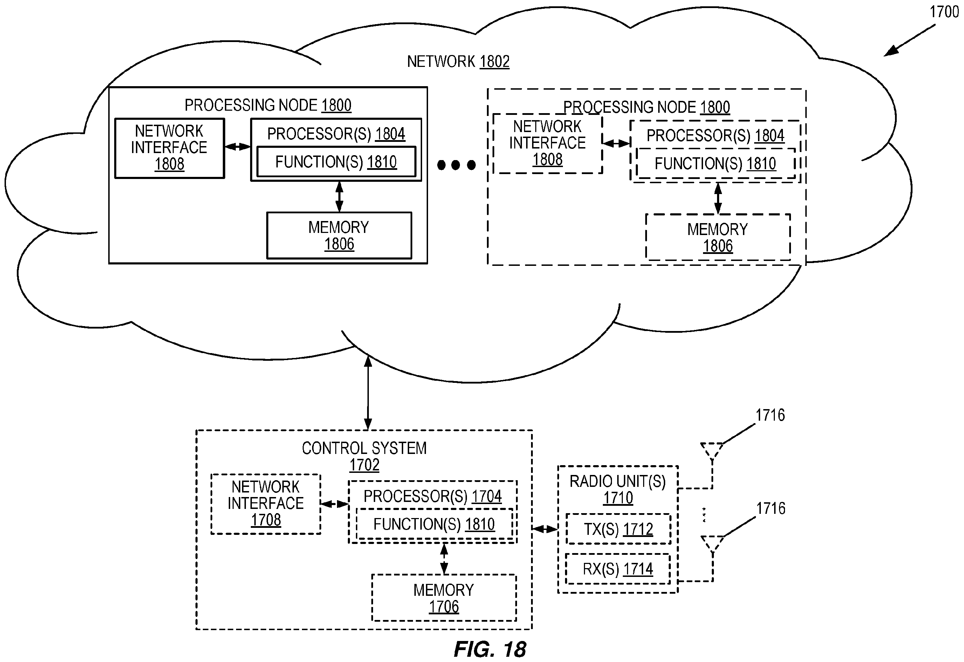

Figure 18 is a schematic block diagram that illustrates a virtualized embodiment of the radio access node 1700 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1700 in which at least a portion of the functionality of the radio access node 1700 is implemented as a virtual component(s) (e.g., via a virtual machine(s) executing on a physical processing node(s) in a network(s)). As illustrated, in this example, the radio access node 1700 may include the control system 1702 and/or the one or more radio units 1710, as described above. The control system 1702 may be connected to the radio unit(s) 1710 via, for example, an optical cable or the like. The radio access node 1700 includes one or more processing nodes 1800 coupled to or included as part of a network(s) 1802. If present, the control system 1702 or the radio unit(s) are connected to the processing node(s) 1800 via the network 1802. Each processing node 1800 includes one or more processors 1804 (e.g., CPUs, ASICs, FPGAs, and/or the like), memory 1806, and a network interface 1808.

In this example, functions 1810 of the radio access node 1700 described herein are implemented at the one or more processing nodes 1800 or distributed across the one or more processing nodes 1800 and the control system 1702 and/or the radio unit(s) 1710 in any desired manner. In some particular embodiments, some or all of the functions 1810 of the radio access node 1700 described herein are implemented as virtual components executed by one or more virtual machines implemented in a virtual environment(s) hosted by the processing node(s) 1800. As will be appreciated by one of ordinary skill in the art, additional signaling or communication between the processing node(s) 1800 and the control system 1702 is used in order to carry out at least some of the desired functions 1810. Notably, in some embodiments, the control system 1702 may not be included, in which case the radio unit(s) 1710 communicates directly with the processing node(s) 1800 via an appropriate network interface(s).

In some embodiments, a computer program including instructions which, when executed by at least one processor, causes the at least one processor to carry out the functionality of radio access node 1700 or a node (e.g., a processing node 1800) implementing one or more of the functions 1810 of the radio access node 1700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 19 is a schematic block diagram of the radio access node 1700 according to some other embodiments of the present disclosure. The radio access node 1700 includes one or more modules 1900, each of which is implemented in software. The module(s) 1900 provides the functionality of the radio access node 1700 described herein. This discussion is equally applicable to the processing node 1800 of Figure 18 where the modules 1900 may be implemented at one of the processing nodes 1800 or distributed across multiple processing nodes 1800 and/or distributed across the processing node(s) 1800 and the control system 1702.

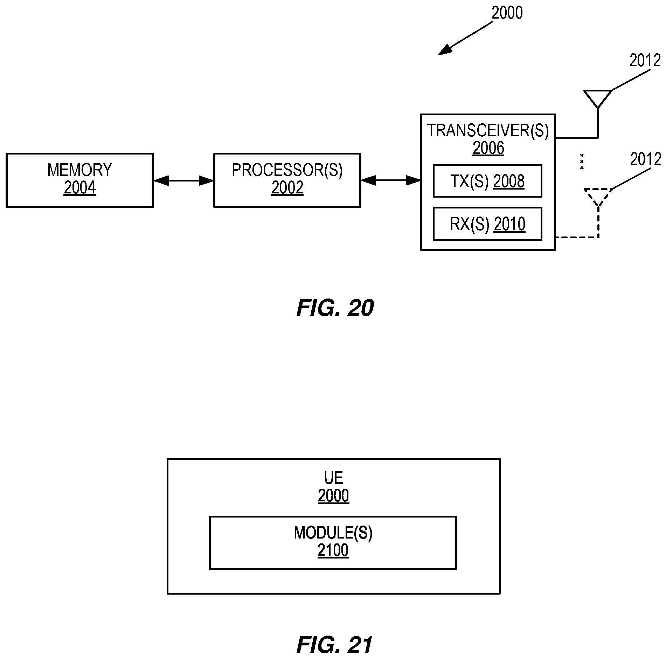

Figure 20 is a schematic block diagram of a wireless communication device 2000 according to some embodiments of the present disclosure. As illustrated, the wireless communication device 2000 includes one or more processors 2002 (e.g., CPUs, ASICs, FPGAs, and/or the like), memory 2004, and one or more transceivers 2006 each including one or more transmitters 2008 and one or more receivers 2010 coupled to one or more antennas 2012. The transceiver(s) 2006 includes radio-front end circuitry connected to the antenna(s) 2012 that is configured to condition signals communicated between the antenna(s) 2012 and the processor(s) 2002, as will be appreciated by on of ordinary skill in the art. The processors 2002 are also referred to herein as processing circuitry. The transceivers 2006 are also referred to herein as radio circuitry. In some embodiments, the functionality of the wireless communication device 2000 described above may be fully or partially implemented in software that is, e.g., stored in the memory 2004 and executed by the processor(s) 2002. Note that the wireless communication device 2000 may include additional components not illustrated in Figure 20 such as, e.g., one or more user interface components (e.g., an input/output interface including a display, buttons, a touch screen, a microphone, a speaker(s), and/or the like and/or any other components for allowing input of information into the wireless communication device 2000 and/or allowing output of information from the wireless communication device 2000), a power supply (e.g., a battery and associated power circuitry), etc.

In some embodiments, a computer program including instructions which, when executed by at least one processor, causes the at least one processor to carry out the functionality of the wireless communication device 2000 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 21 is a schematic block diagram of the wireless communication device 2000 according to some other embodiments of the present disclosure. The wireless communication device 2000 includes one or more modules 2100, each of which is implemented in software. The module(s) 2100 provides the functionality of the wireless communication device 2000 described herein.

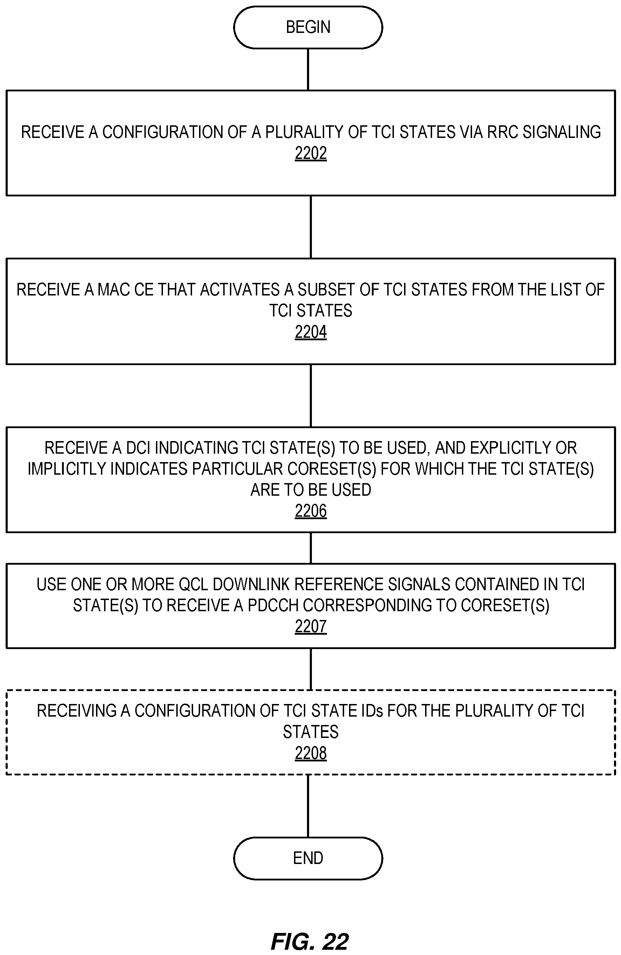

Figure 22 is a flowchart for a method performed by a wireless communication device 1012. It should be noted that the steps depicted in Figure 22 can be performed by, or otherwise executed by, a wireless device, wireless communication device (e.g., WCD 1012), etc.), virtualized wireless device, etc. Note that according to some embodiments, one or more steps in Figure 22 can be performed, while other steps are optional. Such steps are indicated by a dashed box.

At step 2202, the wireless communication device receives a configuration of a plurality of TCI states is via RRC signaling (e.g., as described with regards to steps 1302 of Figure 13, 1402 of Figure 14, etc.).

At step 2204, the wireless communication device receives a MAC CE that activates a subset of the plurality of TCI states (e.g., as described with regards to steps 1306 of Figure 13, 1406 of Figure 14, etc.).

At step 2206, the wireless communication device receives a DCI (e.g., as described with regards to steps 1308 of Figure 13, 1408 of Figure 14, etc.). The DCI indicates one or more of the subset of the plurality of TCI states to be used. Additionally, the DCI explicitly or implicitly indicates one or more particular CORESETs for which the one or more of the subset of the plurality of TCI states are to be used.

At step 2207, the wireless communication devices uses one or more spatial Quasi-CoLocation (QCL) downlink reference signals contained in the one or more of the subset of the plurality of states to receive a PDCCH corresponding to the one or more particular CORESETs, as would be appreciated by one skilled in the art.

At step 2208, in some embodiments, the wireless device receives a configuration of TCI state IDs for the plurality of TCI states (e.g., as described with regards to steps 1304 of Figure 13, 1404 of Figure 14, etc.). The configuration of the plurality of TCI states is common for two or more CORESETs, or is common per CORESET.

In some embodiments, both the configuration of the plurality of TCI states and the configuration of the TCI state IDs are received via a PDSCH configuration IE. In some embodiments, the configuration of the plurality of TCI states applies to all CORESETs configured in a same bandwidth part as the PDSCH-CONFIG IE.

In some embodiments, the MAC CE activates the subset of the plurality of TCI states for all CORESETs configured in a same bandwidth part as the configuration of the plurality of TCI states. In some embodiments, the MAC CE includes a bandwidth part ID, a serving cell ID, and TCI state IDs of the subset of the plurality of TCI states activated, but does not include a CORESET ID.

In some embodiments, the MAC CE activates the subset of the plurality of TCI states for all CORESETs configured in a same bandwidth part as that indicated by the bandwidth part ID included in the MAC CE.

In some embodiments, the configuration of TCI state IDs for the plurality of TCI states is per CORESET. In some embodiments, the MAC CE activates up to M TCI states per CORESET. In some embodiments, the MAC CE includes a bandwidth part ID, a serving cell ID, TCI state IDs of the subset of the plurality of TCI states activated, and a CORESET ID.

In some embodiments, the DCI implicitly indicates the one or more particular CORESETs for which the one or more of the subset of the plurality of TCI states are to be used.

In some embodiments, the one or more particular CORESETs for which the one or more of the subset of the plurality of TCI states are to be used consist of a CORESET in which a PDCCH carrying the DCI is received.

In some embodiments, the DCI explicitly indicates the one or more particular CORESETs for which the one or more of the subset of the plurality of TCI states are to be used. In some embodiments, the DCI includes a bitfield that indicates the one or more particular CORESETs for which the one or more of the subset of the plurality of TCI states are to be used.

In some embodiments, a TCI update provided by the DCI is applied to CORESETs in two or more serving cells or two or more component carriers, simultaneously. In some embodiments, the two or more serving cells or the two or more component carriers to which the TCI updated provided by the DCI is to be simultaneously applied are preconfigured. In some embodiments, the two or more serving cells or the two or more component carriers are indicated by a higher layer parameter. In some embodiments, the two or more serving cells or the two or more component carriers are indicated by a higher layer parameter. The higher layer parameter indicates that when a TCI state of a particular CORESET is updated via DCI in one serving cell, then TCI state(s) of corresponding CORESET(s) in one or more other serving cells are also to be updated simultaneously. In some embodiments, the CORESETs in the two or more serving cells or the two or more component carriers are CORESETs in a same CORESET pool as a CORESET implicitly or explicitly indicated by the DCI.

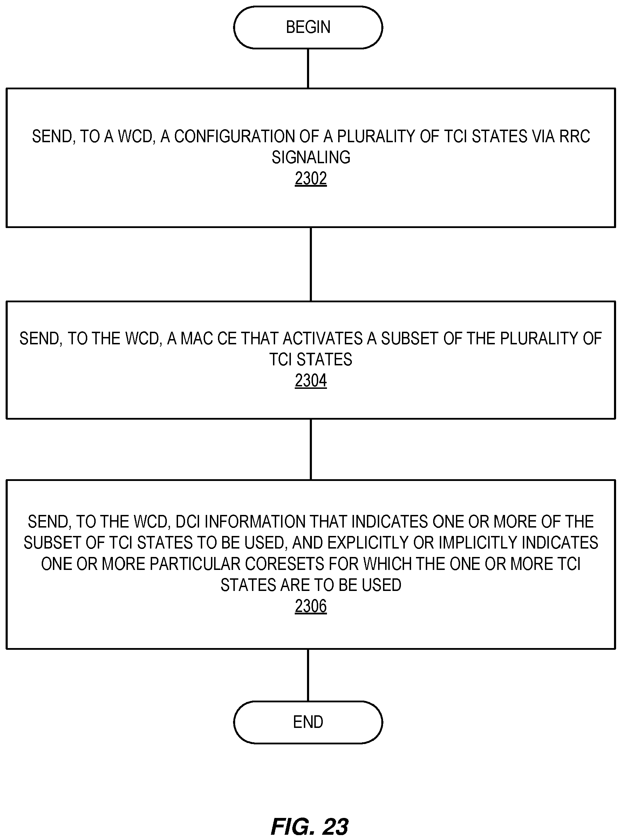

Figure 23 is a flowchart for a method performed by a base station 1002 (e.g., a gNB, etc.). Note that according to some embodiments, one or more steps in Figure 23 can be performed, while other steps are optional. Such steps are indicated by a dashed box.

At step 2302, the base station sends, to a wireless communication device, a configuration of a plurality of TCI states via RRC signaling.

At step 2304, the base station sends, to the wireless communication device, a MAC CE that activates a subset of the plurality of TCI states.

At step 2306, the base station sends, to the wireless communication device, a DCI. The DCI indicates one or more of the subset of the plurality of TCI states to be used. Additionally, the DCI explicitly or implicitly indicates one or more particular CORESETs for which the one or more of the subset of the plurality of TCI states are to be used.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | | |
|---|---|---|
| • | 3GPP | Third Generation Partnership Project |
| • | 5G | Fifth Generation |
| • | 5GC | Fifth Generation Core |
| • | 5GS | Fifth Generation System |
| • | AMF | Access and Mobility Management Function |
| • | AN | Access Network |
| • | ASIC | Application Specific Integrated Circuit |
| • | AUSF | Authentication Server Function |
| • | BWP | Bandwidth Part |
| • | CE | Control Element |
| • | CONFIG IE | Configuration Information Element |
| • | CORESET | Control Resource Sets |
| • | CP | Control Plane |
| • | CP-OFDM | Cyclic Prefix Orthogonal Frequency Division Multiplexing |
| • | CPU | Central Processing Unit |
| • | CRC | Cyclic Redundancy Check |
| • | CSI-RS | Channel State Information Reference Signal |
| • | DCI | Downlink Control Information |
| • | DFT | Discrete Fourier Transform |
| • | DL | Downlink |
| • | DMRS | DeModulation Reference Signal |
| • | DN | Data Network |
| • | DSP | Digital Signal Processor |
| • | eNB | Enhanced or Evolved Node B |
| • | EPS | Evolved Packet System |
| • | E-UTRAN | Evolved Universal Terrestrial Radio Access Network |
| • | FPGA | Field Programmable Gate Array |
| • | FR | Frequency Range |
| • | gNB | New Radio Base Station |
| • | gNB-CU | New Radio Base Station Central Unit |
| • | gNB-DU | New Radio Base Station Distributed Unit |
| • | HARQ | Hybrid Automatic Repeat Request |
| • | HSS | Home Subscriber Server |
| • | IE | Information Element |
| • | IoT | Internet of Things |
| • | IP | Internet Protocol |
| • | LTE | Long Term Evolution |
| • | MAC | Medium Access Control |
| • | MCS | Modulation and Coding Scheme |
| • | MME | Mobility Management Entity |
| • | MTC | Machine Type Communication |
| • | NEF | Network Exposure Function |
| • | NF | Network Function |
| • | NR | New Radio |
| • | NRF | Network Function Repository Function |
| • | NSSF | Network Slice Selection Function |
| • | OFDM | Orthogonal Frequency Division Multiplexing |
| • | PBCH | Physical Broadcast Channel |
| • | PC | Personal Computer |
| • | PCF | Policy Control Function |
| • | PDCCH | Physical Downlink Control Channel |
| • | PDSCH | Physical Downlink Shared Channel |
| • | P-GW | Packet Data Network Gateway |
| • | PRB | Physical Resource Block |
| • | PSS | Primary Synchronization Signal |
| • | PUCCH | Physical Uplink Control Channel |
| • | PUSCH | Physical Uplink Shared Channel |
| • | QCL | Quasi Co-Located |
| • | QoS | Quality of Service |
| • | RAM | Random Access Memory |
| • | RAN | Radio Access Network |
| • | RBs | Resource Blocks |
| • | RE | Resource Element |
| • | RF | Radio Frequency |
| • | ROM | Read Only Memory |
| • | RRC | Radio Resource Control |
| • | RRH | Remote Radio Head |
| • | RS | Reference Signal |
| • | RTT | Round Trip Time |
| • | SCEF | Service Capability Exposure Function |
| • | SMF | Session Management Function |
| • | SPS | Semi-Persistently Scheduled |
| • | SRI | SRS Resource Indicator |
| • | SRS | Sounding Reference Signal |
| • | SS | Synchronization Signal |
| • | SSB | Synchronization Signal Block |
| • | TCI | Transmission Configuration Indicator |
| • | TP | Transmission Point |
| • | TRP | Transmission/Reception Point |
| • | TRS | Tracking Reference Signal |
| • | UDM | Unified Data Management |
| • | UE | User Equipment |
| • | UL | Uplink |
| • | UPF | User Plane Function |

The invention is defined by the appended claims.

## Claims

1. A method performed by a wireless communication device (1012), the method comprising:
receiving (1302; 1402; 2202) a configuration of a plurality of Transmission Configuration Indicator, TCI, states via Radio Resource Control, RRC, signaling;
receiving (1306; 1406; 2204) a Media Access Control, MAC, Control Element, CE, that activates a subset of the plurality of TCI states;
receiving (1308; 1408; 2206) a downlink control information, DCI, that:
indicates one or more of the subset of the plurality of TCI states to be used; and
explicitly indicates one or more particular Control Resource Sets, CORESETs, for which the one or more of the subset of the plurality of TCI states are to be used; and
using (2207) one or more spatial quasi colocation, QCL, downlink reference signals contained in the one or more of the subset of the plurality of TCI states to receive a Physical Downlink Control Channel, PDCCH, corresponding to the one or more particular CORESETs.

2. The method of claim 1 further comprising receiving (1304; 1404) a configuration of TCI state IDs for the plurality of TCI states, the configuration of the plurality of TCI state IDs being common for two or more Control Resource Sets, CORESETs, or being per CORESET.

3. The method of claim 2 wherein both the configuration of the plurality of TCI states and the configuration of the TCI state IDs are received in a Physical Downlink Shared Channel, PDSCH, Configuration Information Element, PDSCH-CONFIG IE.

4. The method of claim 3 wherein the configuration of the plurality of TCI states applies to all CORESETs configured in a same bandwidth part as the PDSCH-CONFIG IE,
wherein, optionally, the MAC CE activates the subset of the plurality of TCI states for all CORESETs configured in a same bandwidth part as the configuration of the plurality of TCI states.

5. The method of claim 4 wherein the MAC CE comprises a bandwidth part ID, a serving cell ID, and TCI state IDs of the subset of the plurality of TCI states activated, but does not include a CORESET ID.

6. The method of claim 5 wherein the MAC CE activates the subset of the plurality of TCI states for all CORESETs configured in a same bandwidth part as that indicated by the bandwidth part ID comprised in the MAC CE.

7. The method of claim 2 wherein the configuration of TCI state IDs for the plurality of TCI states is per CORESET.

8. The method of claim 7 wherein the MAC CE activates up to M TCI states per CORESET.

9. The method of claim 8 wherein the MAC CE comprises a bandwidth part ID, a serving cell ID, TCI state IDs of the subset of the plurality of TCI states activated, and a CORESET ID.

10. The method of any one of claims 1 to 9 wherein the DCI comprises a bitfield that indicates the one or more particular CORESETs for which the one or more of the subset of the plurality of TCI states are to be used.

11. The method of any of claims 1 to 10 wherein a TCI update provided by the DCI is applied to CORESETs in two or more serving cells or two or more component carriers, simultaneously.

12. The method of claim 11 wherein:
- the two or more serving cells or the two or more component carriers to which the TCI updated provided by the DCI is to be simultaneously applied are preconfigured; or
- the two or more serving cells or the two or more component carriers are indicated by a higher layer parameter; or
- the two or more serving cells or the two or more component carriers are indicated by a higher layer parameter, the higher layer parameter indicating that when a TCI state of a particular CORESET is updated via DCI in one serving cell, then TCI state(s) of corresponding CORESET(s) in one or more other serving cells are also to be updated simultaneously; or
- the CORESETs in the two or more serving cells or the two or more component carriers are CORESETs in a same CORESET pool as a CORESET implicitly or explicitly indicated by the DCI.

13. A wireless communication device (1012) adapted to perform the method of any of claims 1 to 12.

14. A method performed by a network node, the method comprising:
sending (2302), to a wireless communication device (2012), a configuration of a plurality of Transmission Configuration Indicator, TCI, states via Radio Resource Control, RRC, signaling, the plurality of TCI states comprising one or more spatial quasi colocation, QCL, downlink reference signals to enable the wireless communication device to receive a Physical Downlink Control Channel, PDCCH, corresponding to one or more particular Control Resource Sets, CORESETs;
sending (2304), to the wireless communication device (2012), a Media Access Control, MAC, Control Element, CE, that activates a subset of the plurality of TCI states; and
sending (2306), to the wireless communication device (2012), a downlink control information, DCI, that:
indicates one or more of the subset of the plurality of TCI states to be used; and
explicitly indicates the one or more particular CORESETs for which the one or more of the subset of the plurality of TCI states are to be used.

15. A network node (1700) adapted to perform the method of claim 14.

## Patentansprüche

1. Verfahren, das von einer drahtlosen Kommunikationsvorrichtung (1012) durchgeführt wird, wobei das Verfahren umfasst:
Empfangen (1302; 1402; 2202) einer Konfiguration einer Mehrzahl von Übertragungskonfigurationsindikator-,TCI-,Zuständen über Funkressourcensteuerungs-,RRC-,Signalisierung;
Empfangen (1306; 1406; 2204) eines Medienzugriffssteuerungs-,MAC-,Steuerelements, CE, das eine Teilmenge der Mehrzahl von TCI-Zuständen aktiviert;
Empfangen (1308; 1408; 2206) einer Downlink-Steuerinformationen, DCI, die:
einen oder mehrere der Teilmenge der Mehrzahl von TCI-Zuständen angibt, die verwendet werden sollen; und
explizit einen oder mehrere spezifische Steuerressourcensätze, CORESETs, angibt, für die der eine oder die mehreren der Teilmenge der Mehrzahl von TCI-Zuständen verwendet werden sollen; und
Verwenden (2207) eines oder mehrerer Downlink-Referenzsignale einer räumlichen Quasi-Colocation, QCL, die in dem einen oder den mehreren der Teilmenge der Mehrzahl von TCI-Zuständen enthalten sind, um einen physikalischen Downlink-Steuerkanal, PDCCH, zu empfangen, der dem einen oder den mehreren spezifischen CORESETs entspricht.

2. Verfahren nach Anspruch 1, ferner umfassend ein Empfangen (1304; 1404) einer Konfiguration von TCI-Zustands-IDs für die Mehrzahl von TCI-Zuständen, wobei die Konfiguration der Mehrzahl von TCI-Zustands-IDs für zwei oder mehr Steuerressourcensätze, CORESETs, gemeinsam oder pro CORESET ist.

3. Verfahren nach Anspruch 2, wobei sowohl die Konfiguration der Mehrzahl von TCI-Zuständen als auch die Konfiguration der TCI-Zustands-IDs in einem Konfigurationsinformationselement, PDSCH-CONFIG-IE, eines gemeinsamen physikalischen Downlink-Kanals, PDSCH, empfangen werden.

4. Verfahren nach Anspruch 3, wobei die Konfiguration der Mehrzahl von TCI-Zuständen auf alle CORESETs angewendet wird, die in einem gleichen Bandbreitenteil wie das PDSCH--CONFIG-IE konfiguriert sind,
wobei optional das MAC-CE die Teilmenge der Mehrzahl von TCI-Zustände für alle CORESETs aktiviert, die in einem gleichen Bandbreitenteil wie die Konfiguration der Mehrzahl von TCI-Zuständen konfiguriert sind.

5. Verfahren nach Anspruch 4, wobei das MAC-CE eine Bandbreitenteil-ID, eine ID einer bedienenden Zelle und TCI-Zustands-IDs der Teilmenge der Mehrzahl von aktivierten TCI-Zuständen umfasst, aber keine CORESET-ID umfasst.

6. Verfahren nach Anspruch 5, wobei das MAC-CE die Teilmenge der Mehrzahl von TCI-Zustände für alle CORESETs aktiviert, die in einem gleichen Bandbreitenteil wie jene konfiguriert sind, die durch die Bandbreitenteil-ID angegeben werden, die im MAC-CE umfasst ist.

7. Verfahren nach Anspruch 2, wobei die Konfiguration von TCI-Zustands-IDs für die Mehrzahl von TCI-Zuständen pro CORESET ist.

8. Verfahren nach Anspruch 7, wobei das MAC-CE bis zu M TCI-Zustände pro CORESET aktiviert.

9. Verfahren nach Anspruch 8, wobei das MAC-CE eine Bandbreitenteil-ID, eine ID einer bedienenden Zelle und TCI-Zustands-IDs der Teilmenge der Mehrzahl von aktivierten TCI-Zuständen und eine CORESET-ID umfasst.

10. Verfahren nach einem der Ansprüche 1 bis 9, wobei die DCI ein Bitfeld umfassen, das den einen oder die mehreren spezifischen CORESETs angibt, für die ein oder mehrere der Teilmenge der Mehrzahl von TCI-Zuständen verwendet werden sollen.

11. Verfahren nach einem der Ansprüche 1 bis 10, wobei eine TCI-Aktualisierung, die durch die DCI bereitgestellt wird, auf CORESETs in zwei oder mehr bedienenden Zellen oder zwei oder mehr Komponententrägern simultan angewendet wird.

12. Verfahren nach Anspruch 11, wobei:
- die zwei oder mehr bedienenden Zellen oder die zwei oder mehr Komponententräger, auf die die TCI-Aktualisierung, die durch die DCI bereitgestellt wird, simultan angewendet werden soll, vorkonfiguriert sind; oder
- die zwei oder mehr bedienenden Zellen oder die zwei oder mehr Komponententräger durch einen Parameter einer höheren Schicht angegeben werden;
oder
- die zwei oder mehr bedienenden Zellen oder die zwei oder mehr Komponententräger durch einen Parameter einer höheren Schicht angegeben werden, wobei der Parameter der höheren Schicht angibt, dass dann, wenn ein TCI-Zustand eines spezifischen CORESET durch DCI in einer bedienenden Zelle aktualisiert wird, ein oder mehrere TCI-Zustände eines oder mehrerer entsprechender CORESET(s) in einer oder mehreren anderen bedienenden Zellen ebenfalls simultan aktualisiert werden; oder
- die CORESETs in den zwei oder mehr bedienenden Zellen oder den zwei oder mehr Komponententrägern CORESETs in einem gleichen CORESET-Pool sind wie ein CORESET, der implizit oder explizit durch die DCI angegeben wird.

13. Drahtlose Kommunikationsvorrichtung (1012), die zum Durchführen des Verfahrens nach einem der Ansprüche 1 bis 12 ausgelegt ist.

14. Verfahren, das von einem Netzwerkknoten durchgeführt wird, wobei das Verfahren umfasst:
Senden (2302) einer Konfiguration einer Mehrzahl von Übertragungskonfigurationsindikator-,TCI-,Zuständen über Funkressourcensteuerungs-,RRC-,Signalisierung an eine drahtlose Kommunikationsvorrichtung (2012), wobei die Mehrzahl von TCI-Zuständen ein oder mehrere Downlink-Referenzsignale einer räumlichen Quasi-Colocation, QCL, umfassen, um die drahtlose Kommunikationsvorrichtung zum Empfangen eines physikalischen Downlink-Steuerkanals, PDCCH, zu befähigen, der einem oder mehreren spezifischen Steuerressourcensätzen, CORESETs, entspricht;
Senden (2304) eines Medienzugriffssteuerungs-,MAC-,Steuerelements, CE, das eine Teilmenge der Mehrzahl von TCI-Zuständen aktiviert, an die drahtlose Kommunikationsvorrichtung (2012);
Senden (2306) einer Downlink-Steuerinformation, DCI, an die drahtlose Kommunikationsvorrichtung (2012), die:
einen oder mehrere der Teilmenge der Mehrzahl von TCI-Zuständen angibt, die verwendet werden sollen; und
explizit einen oder mehrere spezifische CORESETs angibt, für die der eine oder die mehreren der Teilmenge der Mehrzahl von TCI-Zuständen verwendet werden sollen.

15. Netzwerkknoten (1700), der zum Durchführen des Verfahrens nach Anspruch 14 ausgelegt ist.

## Revendications

1. Procédé réalisé par un dispositif de communication sans fil (1012), le procédé comprenant :
la réception (1302 ; 1402 ; 2202) d'une configuration d'une pluralité d'états d'indicateur de configuration de transmission, TCI, via une signalisation de commande de ressources radio, RRC ;
la réception (1306 ; 1406 ; 2204) d'un élément de commande, CE, de commande d'accès au support, MAC, qui active un sous-ensemble de la pluralité d'états TCI ;
la réception (1308 ; 1408 ; 2206) d'une information de commande de liaison descendante, DCI, qui :
indique un ou plusieurs du sous-ensemble de la pluralité d'états TCI à utiliser ; et
indique explicitement un ou plusieurs ensembles de ressources de commande, CORESET, particuliers pour lesquels les un ou plusieurs du sous-ensemble de la pluralité d'états TCI doivent être utilisés ; et
l'utilisation (2207) d'un ou plusieurs signaux de référence de liaison descendante de quasi-colocalisation, QCL, spatiale contenus dans les un ou plusieurs du sous-ensemble de la pluralité d'états TCI pour recevoir un canal de commande de liaison descendante physique, PDCCH, correspondant aux un ou plusieurs CORESET particuliers.

2. Procédé selon la revendication 1, comprenant en outre la réception (1304 ; 1404) d'une configuration d'identifiants d'état TCI pour la pluralité d'états TCI, la configuration de la pluralité d'identifiants d'état TCI étant commune à deux ensembles de ressources de commande, CORESET, ou plus, ou étant par CORESET.

3. Procédé selon la revendication 2, dans lequel à la fois la configuration de la pluralité d'états TCI et la configuration des identifiants d'état TCI sont reçues dans un élément d'information de configuration de canal partagé de liaison descendante physique, PDSCH, PDSCH-CONFIG IE.

4. Procédé selon la revendication 3, dans lequel la configuration de la pluralité d'états TCI s'applique à tous les CORESET configurés dans une même partie de bande passante que le PDSCH-CONFIG IE,
dans lequel facultativement le MAC CE active le sous-ensemble de la pluralité d'états TCI pour tous les CORESET configurés dans une même partie de bande passante que la configuration de la pluralité d'états TCI.

5. Procédé selon la revendication 4, dans lequel le MAC CE comprend un identifiant de partie de bande passante, un identifiant de cellule de desserte, et des identifiants d'état TCI du sous-ensemble de la pluralité d'états TCI activés, mais n'inclut pas d'identifiant CORESET.

6. Procédé selon la revendication 5, dans lequel le MAC CE active le sous-ensemble de la pluralité d'états TCI pour tous les CORESET configurés dans une même partie de bande passante que celle indiquée par l'identifiant de partie de bande passante compris dans le MAC CE.

7. Procédé selon la revendication 2, dans lequel la configuration des identifiants d'état TCI pour la pluralité d'états TCI est par CORESET.

8. Procédé selon la revendication 7, dans lequel le MAC CE active jusqu'à M états TCI par CORESET.

9. Procédé selon la revendication 8, dans lequel le MAC CE comprend un identifiant de partie de bande passante, un identifiant de cellule de desserte, des identifiants d'état TCI du sous-ensemble de la pluralité d'états TCI activés, et un identifiant de CORESET.

10. Procédé selon l'une quelconque des revendications 1 à 9, dans lequel la DCI comprend un champ binaire qui indique les un ou plusieurs CORESET particuliers pour lesquels les un ou plusieurs du sous-ensemble de la pluralité d'états TCI doivent être utilisés.

11. Procédé selon l'une quelconque des revendications 1 à 10, dans lequel une mise à jour de TCI fournie par la TCI est appliquée simultanément aux CORESET dans deux cellules de desserte ou plus ou dans deux porteuses composantes ou plus.

12. Procédé selon la revendication 11, dans lequel :
- les deux cellules de desserte ou plus ou les deux porteuses composantes ou plus auxquelles le TCI mis à jour fourni par la DCI doit être appliqué simultanément sont préconfigurées ; ou
- les deux cellules de desserte ou plus ou les deux porteuses composantes ou plus sont indiquées par un paramètre de couche supérieure ; ou
- les deux cellules de desserte ou plus ou les deux porteuses composantes ou plus sont indiquées par un paramètre de couche supérieure, le paramètre de couche supérieure indiquant que, lorsqu'un état TCI d'un CORESET particulier est mis à jour via une DCI dans une cellule de desserte, alors un ou plusieurs états TCI d'un ou plusieurs CORESET correspondants dans une ou plusieurs autres cellules de desserte doivent également être mis à jour simultanément ; ou
- les CORESET dans les deux cellules de desserte ou plus ou les deux porteuses composantes ou plus sont des CORESET dans un même groupe de CORESET qu'un CORESET indiqué implicitement ou explicitement par la DCI.

13. Dispositif de communication sans fil (1012) adapté pour réaliser le procédé selon l'une quelconque des revendications 1 à 12.

14. Procédé réalisé par un noeud de réseau, le procédé comprenant :
l'envoi (2302), à un dispositif de communication sans fil (2012), d'une configuration d'une pluralité d'états d'indicateur de configuration de transmission, TCI, via une signalisation de commande de ressources radio, RRC, la pluralité d'états TCI comprenant un ou plusieurs signaux de référence de liaison descendante de quasi-colocalisation, QCL, spatiale pour permettre au dispositif de communication sans fil de recevoir un canal de commande de liaison descendante physique, PDCCH, correspondant aux un ou plusieurs ensembles de ressources de commande, CORESET, particuliers ;
l'envoi (2304), au dispositif de communication sans fil (2012), d'un élément de commande, CE, de commande d'accès au support, MAC, qui active un sous-ensemble de la pluralité d'états TCI ; et
l'envoi (2306), au dispositif de communication sans fil (2012), d'une information de commande de liaison descendante, DCI, qui :
indique un ou plusieurs du sous-ensemble de la pluralité d'états TCI à utiliser ; et
indique explicitement les un ou plusieurs CORESET particuliers pour lesquels les un ou plusieurs du sous-ensemble de la pluralité d'états TCI doivent être utilisés.

15. Noeud de réseau (1700) adapté pour réaliser le procédé selon la revendication 14.
